# FASCICULE DE BREVET EUROPEEN

(11) **EP 2 097 431 B1**
(45) Date de publication et mention de la délivrance du brevet: **25.03.2015**
(21) Numéro de dépôt: 07847578.7
(22) Date de dépôt: 30.11.2007
(51) Int. Cl.: C07F 15/00, B01J 31/12

(54) **COMPLEXES CATALYTIQUES A BASE DE RUTHENIUM ET UTILISATION DE TELS COMPLEXES POUR LA METATHESE D'OLEFINES**
KATALYTISCHE KOMPLEXE AUF RUTHENIUMBASIS UND DIE ANWENDUNG SOLCHER KOMPLEXE IN DER OLEFINMETATHESE
RUTHENIUM-BASED CATALYTIC COMPLEXES AND THE USE OF SUCH COMPLEXES FOR OLEFIN METATHESIS

(30) Priorité: 30.11.2006 FR 0610478; 30.01.2007 FR 0700634
(43) Date de publication de la demande: 09.09.2009
(60) Demande divisionnaire: 11192598.8
(73) Titulaire: UMICORE AG & CO. KG, 63457 Hanau-Wolfgang (DE)
(72) Inventeur: MAUDUIT, Marc, 35500 Vitre (FR); LAURENT, Isabelle, 35136 Saint Jacques de la Lande (FR); CLAVIER, Hervé, 56000 Vannes (FR)
(74) Mandataire: Vossius & Partner
(86) Numéro de dépôt international: PCT/EP2007/063062
(87) Numéro de publication internationale: WO 2008/065187

(56) Documents cités:
- EP-A1- 1 905 777
- WO-A-94/05649
- WO-A-03/044060
- WO-A-2004/035596
- DE-A1- 10 335 417
- US-A- 4 287 201
- YAMAGUCHI M., ARISAWA M., HIRAMA M.: "ortho-vinylation reaction of anilines" CHEMICAL COMMUNICATIONS, 1998, pages 1399-1400, XP002475234
- BUDESINSKY Z ET AL: "Tuberculostatics. IX. Allyl and propenyl derivatives of m-aminophenol" COLLECTION OF CZECHOSLOVAK CHEMICAL COMMUNICATIONS, INSTITUTE OF ORGANIC CHEMISTRY & BIOCHEMISTRY, PRAGUE, CZ, vol. 19, 1954, pages 966-975, XP009097954 ISSN: 0010-0765

## Description

La présente invention a pour objet de nouveaux complexes catalytiques à base de ruthénium activés et recyclables ainsi qu'un procédé de synthèse de ceux-ci.

L'invention concerne également l'utilisation de tels complexes catalytiques pour la métathèse d'oléfines.

Le développement de complexes catalytiques à base de ruthénium recyclables ou activés repose sur les travaux de R. Grubbs de l'Université de Californie (USA) relatifs au complexe au ruthénium **2a** (pré-catalyseur **2b**) dit catalyseur de Grubbs II.

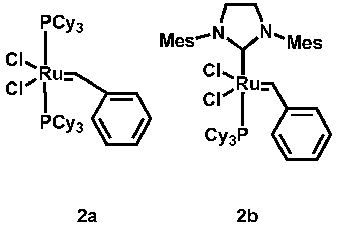

Ainsi le premier complexe recyclable **3a** (précatalyseur **3b**) à ligand styrényléther (ligand dit « bommerang ») a été décrit par Hoveyda de l'Université de Boston (USA).

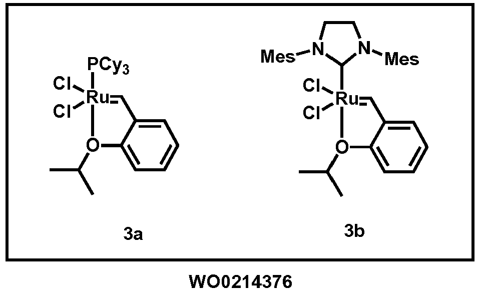

Ce composé est notamment décrit dans la demande de brevet internationale WO0214376.

Un premier avantage de ce complexe est de permettre un recyclage du précatalyseur qui est récupéré en fin de réaction et peut être réutilisé.

Toutefois, ce catalyseur présente l'inconvénient de conduire à des pertes significatives, à hauteur de 10% par cycle.

Un second avantage de ce complexe est de minimiser la présence de résidus métalliques toxiques (ruthénium) dans les produits de réaction.

Cependant, ce complexe s'avère être moins actif que celui de Grubbs **2b** décrit ci-dessus.

Le premier complexe activé **4** a été décrit en 2002 basé sur l'effet électronique induit par la présence d'un groupement nitro (NO₂) sur le complexe à ligand styrénylether d'Hoveyda décrit ci-dessus.

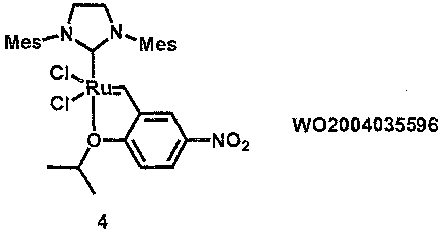

Ce complexe activé est décrit dans la demande de brevet internationale WO2004035596.

L'activation de ce précatalyseur est basée sur le décrochage fortement accéléré du ligand styrénylether qui entraîne une initiation rapide du cycle catalytique et donc par conséquent une augmentation significative de la cinétique réactionnelle. Les réactions peuvent alors avoir lieu dans des conditions plus douces, en pratique à température ambiante, et avec des charges catalytiques plus faibles.

Cependant, ce complexe ne se recycle pas facilement ce qui entraîne de surcroît une importante contamination de résidus métalliques toxiques (ruthénium) dans les produits de réaction. Un tel inconvénient est particulièrement gênant pour la synthèse de certains produits à haute valeur ajoutés telles que les molécules pharmaceutiqeus

Selon l'art antérieur il apparaît donc que réactivité et recyclage de tels complexes de ruthénium sont deux propriétés antinomiques puisqu'en pratique, l'augmentation de l'activité se fait au détriment du recyclage et qu'inversement, l'augmentation du recyclage se fait au détriment de la réactivité de l'espèce catalytique.

DE 103 35 417 A1 décrit un procédé pour la préparation des complexes à ligand styrénylether, et des composés intermédiaires utiles pour ce procédé.

Le but de la présente invention est de décrire des complexes de ruthénium activés et recyclables chez lesquels le compromis entre ces propriétés antinomiques peut être optimisé, c'est-à-dire des complexes susceptibles de combiner une excellente activité tout en conservant un bon recyclage.

Un objectif de la présente invention est donc de proposer de tels complexes dont l'utilisation peut permettre une diminution de la charge catalytique. Un tel objectif est important compte tenu du coût élevé de ces catalyseurs.

Un objectif de la présente invention est donc aussi de proposer de tels complexes dont le degré de recyclabilité entraîne une diminution significative des déchets métalliques toxiques dans les produits finaux.

Dans les meilleurs des cas, les catalyseurs selon la présente invention permettront d'obtenir des produits présentant une très faibles teneurs en ruthénium, en pratique inférieur à 10 à 20 ppm.

Ces objectifs sont atteints grâce à l'invention qui concerne tout composé de formule (I) 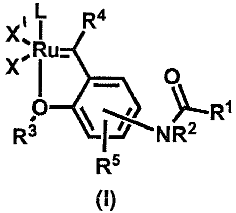 dans laquelle :
X, X' sont des chlores ;
R¹ et R² sont, indépendamment, un hydrogène, un alkyle en C₁ à C₆, un perhalogénoalkyle en C₁ à C₆, un aldéhyde, un nitrile, un cyclohexyle , un radical CₙH₂ₙY ou CₙF₂ₙY avec n compris
entre 1 et 6, et Y un marqueur ionique, ou un radical de formule : 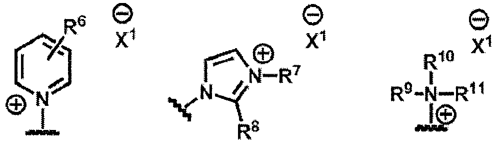
R¹ pouvant être choisi en outre dans le groupe constitué par C₆F₅, pNO₂C₆H₄ et un radical de formule (Ibis), 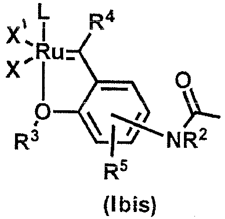
R³ est un alkyle en C₁ à C₆, ou un cycloalkyle en C₅ ou C₆ ou un aryle en C₅ ou C₆ ;
R⁴, R⁵, R⁶, R⁷, R⁸, R⁹, R¹⁰, R¹¹ sont, indépendamment, un hydrogène, un alkyle en C₁ à C₆, un perhalogénoalkyle en C₁ à C₆, ou un aryle en C₅ ou C₆ ; R⁹, R¹⁰, R¹¹ pouvant former un hétérocycle
X¹ est un anion : halogène, tétrafluoroborate ([BF⁴]⁻), [tétrakis-(3 5-bis-(trifluorométhyl)-phényl)borate] ([BARF]⁻), hexafluorophosphate ([PF₆]⁻), hexafluoroantimoine ([SbF₆]⁻), hexafluoroarséniate ([AsF₆]⁻), trifluorométhylsulfonate ([(CF ₃)₂N]⁻);
R¹ et R² pouvant former avec le N et le C auxquels ils sont rattachés un hétérocycle de formule 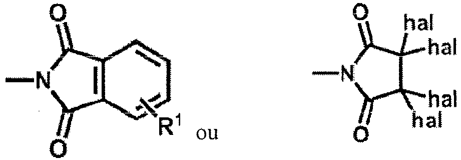 hal étant un halogène et R¹² est un hydrogène, un alkyle en C₁ à C₆, ou un cycloalkyle en C₅ ou C₆ ou un aryle en C₅ ou C₆.
L est un ligand de formule 7a, ou 7b, 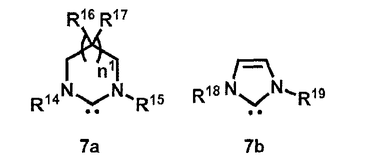 dans lesquelles :
   n¹ = 0, 1, 2, 3;
   R¹⁴, R¹⁵, R¹⁶, R¹⁷, R¹⁸, R¹⁹ sont indépendamment un alkyle en C₁ à C₆, un cycloalkyle en C₃ à C₂₀,
   un alcényle en C₂ à C₂₀, un naphtyl, un anthracène ou un phényl, ledit phényl pouvant être substitué par jusqu'à 5 groupes choisis parmi les alkyles en C₁ à C₆, les alcoxyles en C₁ à C₆ et les halogènes, ; R¹⁶ et R¹⁷ pouvant former un cycle à 3, 4, 5, 6, 7 chaînons ; ou L est PCy₃, Cy étant le cyclohexyle

Le marqueur ionique Y est choisi préférentiellement dans le groupe constitué par :

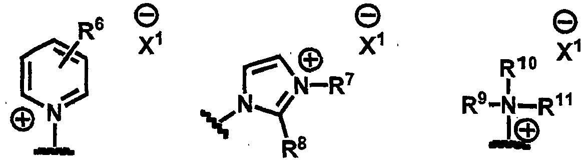

Selon une variante, le composé selon l'invention répond à la formule (I) dans laquelle R¹ est choisi dans le groupe constitué par CH₃, CF₃,C₆F₅,pNO₃C₆H₄

Selon une variante, R¹ est CF₃.

Selon une variante, le composé répond à la formule la

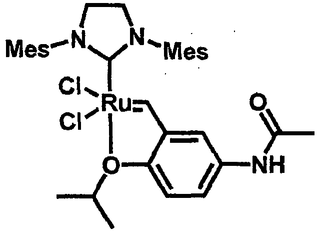

Selon une autre variante, le composé répond à la formule 1b

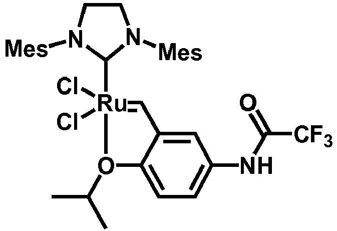

Selon une autre variante, le composé répond à la formule à la formule **1c**

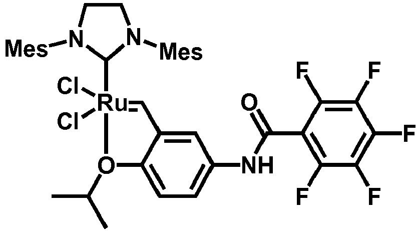

Selon une autre variante, le composé répond à la formule à la formule **1d**

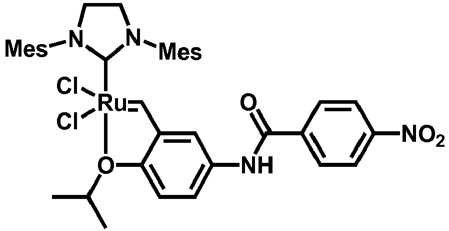

Selon une autre variante, le composé répond à la formule à la formule **1e**

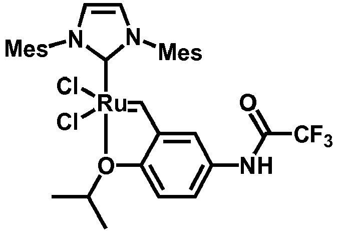

Selon une autre variante, le composé répond à la formule à la formule **1f**

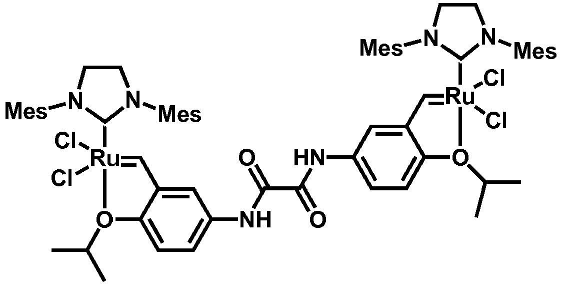

Selon une autre variante, le composé répond à la formule répond à la formule **1g**

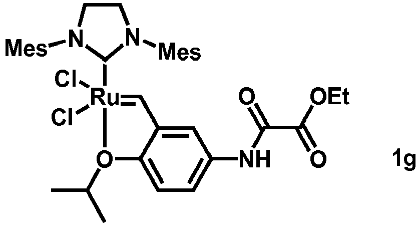

Selon une autre variante, le composé répond à la formule à la formule **1h**

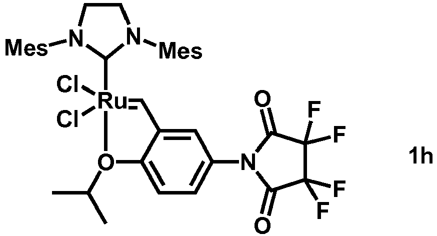

Selon une autre variante, le composé répond à la formule la formule **1i**

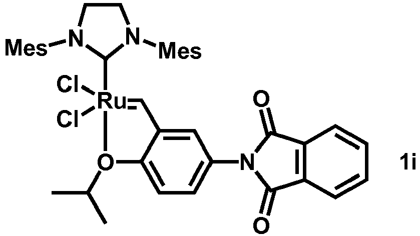

Selon une autre variante, le composé répond à la formule à la formule **1j**

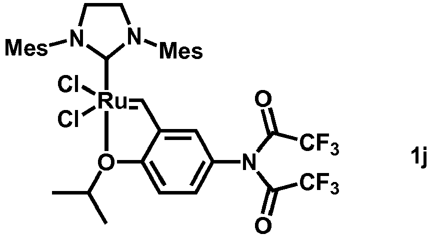

Selon une autre variante, le composé répond à la formule à la formule **1k**

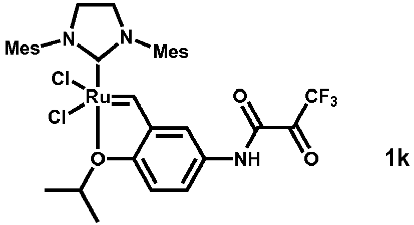

Selon une autre variante, le composé répond à la formule répond à la formule **11**

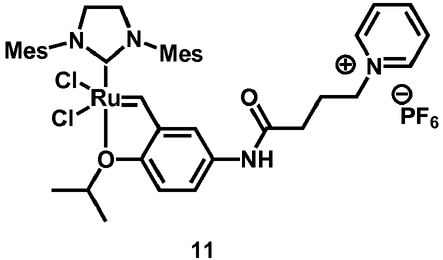

Selon une autre variante, le composé répond à la formule à la formule **12**

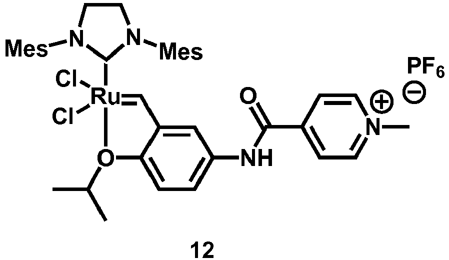

Selon une autre variante, le composé répond à la formule à la formule 13

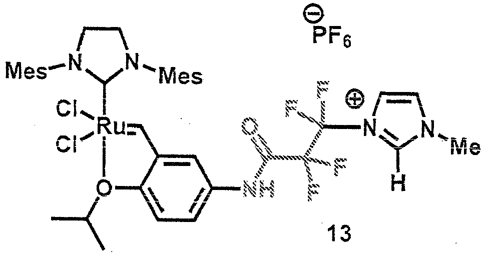

Selon une autre variante, le composé répond à la formule à la formule **14**

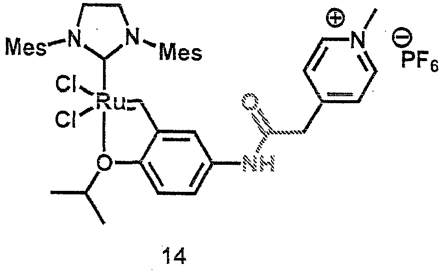

L'invention concerne également tout procédé de synthèse d'un composé de formule (I) ou d'un composé de formule 1g, 1j ou 1k, caractérisé en ce qu'il comprend une première étape consistant à faire réagir la 4-isopropoxy- 3-vinylaniline avec un composé présentant une fonction acyle afin d'obtenir un ligand amide et une seconde étape consistant à faire réagir ce ligand amide avec un composé de formule **(III)**

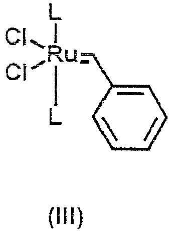

Préférentiellement, ledit composé de formule **(III)** est le précatalyseur Grubbs **(2b)** ou le précatalyseur de Nolan **(2c).**

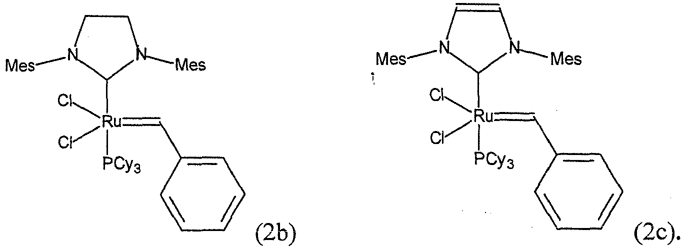

L'introduction, selon l'invention d'une fonction amide sur le ligand styrenylether présente la particularité de promouvoir l'activation du catalyseur.

Notament, lorsque la fonction amide possède un méthyl perfluoré (trifluorométhyl), une forte activation du catalyseur est observée se caractérisant par des conversions relativement élevées en des temps très courts. Dans ces conditions une répercussion économique peut être envisagée par le biais d'une diminution significative de la charge catalytique dans les réactions de métathèse et ce sans altérer les rendements.

De plus, cette fonction amide peut servir d'espaceur pour l'introduction d'un marqueur ("tag") ionique en vue d'une immobilisation en phase aqueuse et /ou ionique ainsi que sur support solide.

Un tel marquage ionique permet de conduire à un meilleur recyclage des complexes catalytiques dans des solvants aqueux/ioniques ou sur support solide (réaction en flux continus) et d'obtenir une nette diminution du coût de la réaction tout en évitant la contamination des produits à haute valeur ajoutée, notamment dans le cadre de procédé de synthèse de molécules pharmaceutiques.

L'invention, ainsi que les différents avantages qu'elle présente, seront plus facilement compris grâce à la description qui va suivre de différents exemples de réalisation de celle-ci donnés en référence aux figures, dans lesquelles :

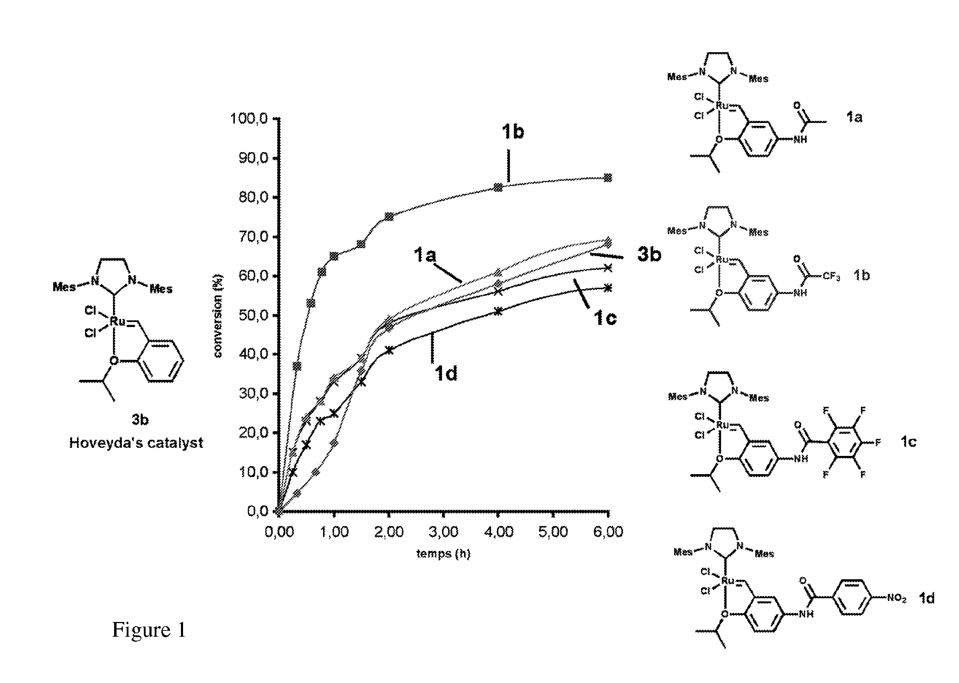

- la figure 1 est un graphique montrant le taux de conversion dans le temps d'un composé métallyle-allyle diéthylmalonate dans le cadre d'une réaction de métathèse cyclisante à température ambiante, en présence de 1 mol % du complexe d'Hoveyda **3b** d'une part et des complexes catalytiques selon l'invention **1a, 1b, 1e, 1d,** d'autre part;

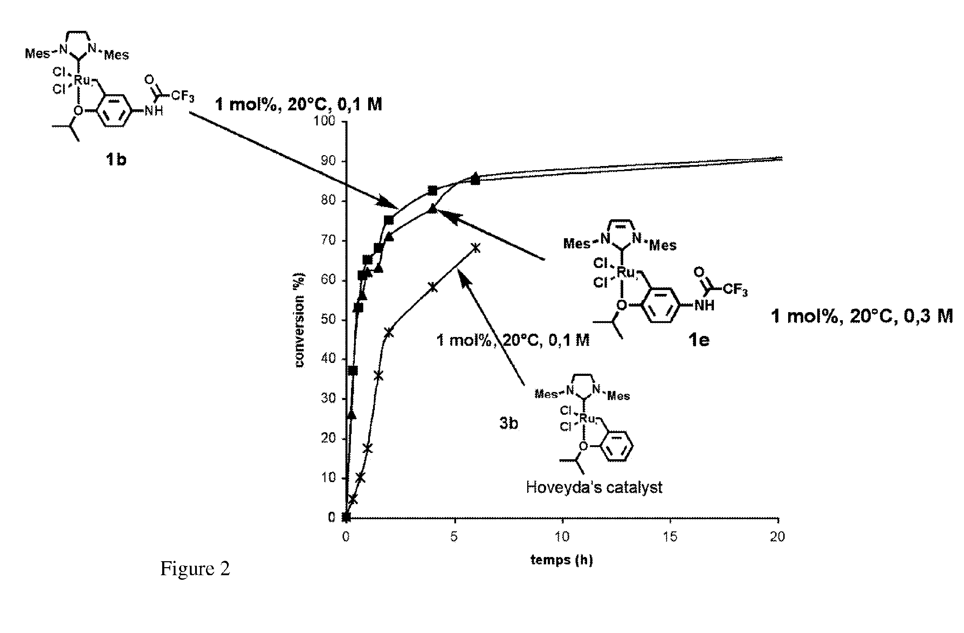

- la figure 2 est un graphique montrant le taux de conversion dans le temps d'un composé métallyle-allyle diéthylmalonate dans le cadre d'une réaction de métathèse cyclisante à température ambiante, en présence de 1 mol % du complexe d'Hoveyda **3b** d'une part et des complexes catalytiques selon l'invention **1b, 1e** d'autre part ;

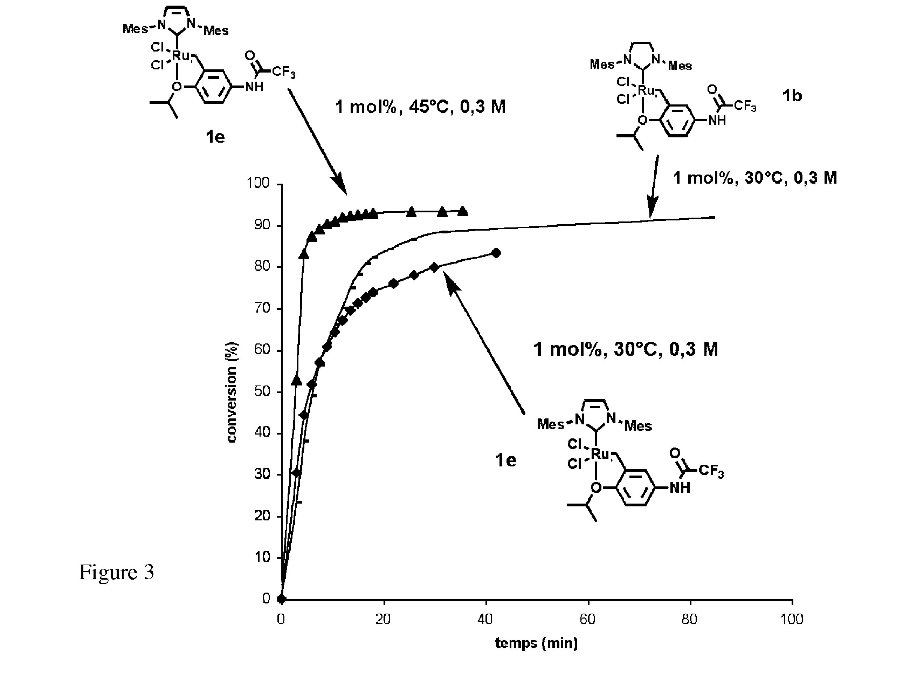

- la figure 3 est un graphique montrant le taux de conversion dans le temps d'un composé métallyle-allyle diéthylmalonate dans le cadre d'une réaction de métathèse cyclisante à 45°C, en présence de 1 mol % du complexe catalytique selon l'invention **1e;**

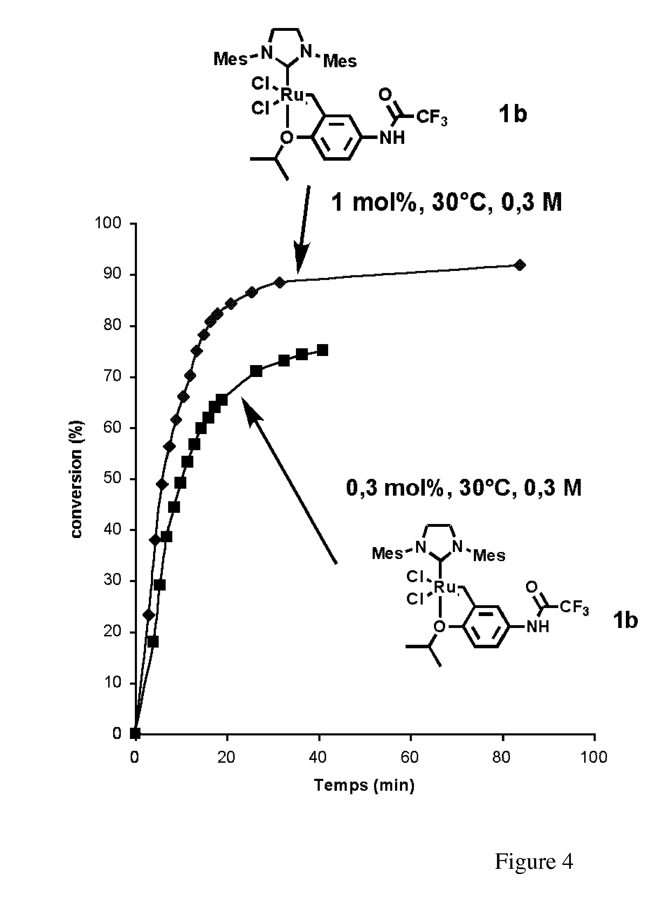

- la figure 4 est un graphique montrant le taux de conversion dans le temps d'un composé métallyle-allyle diéthylmalonate dans le cadre d'une réaction de métathèse cyclisante à 30°C, en présence de 1 mol % du complexe catalytique selon l'invention **1b** d'une part et de 0,3 mol% du complexe catalytique selon l'invention **1b** d'autre part;

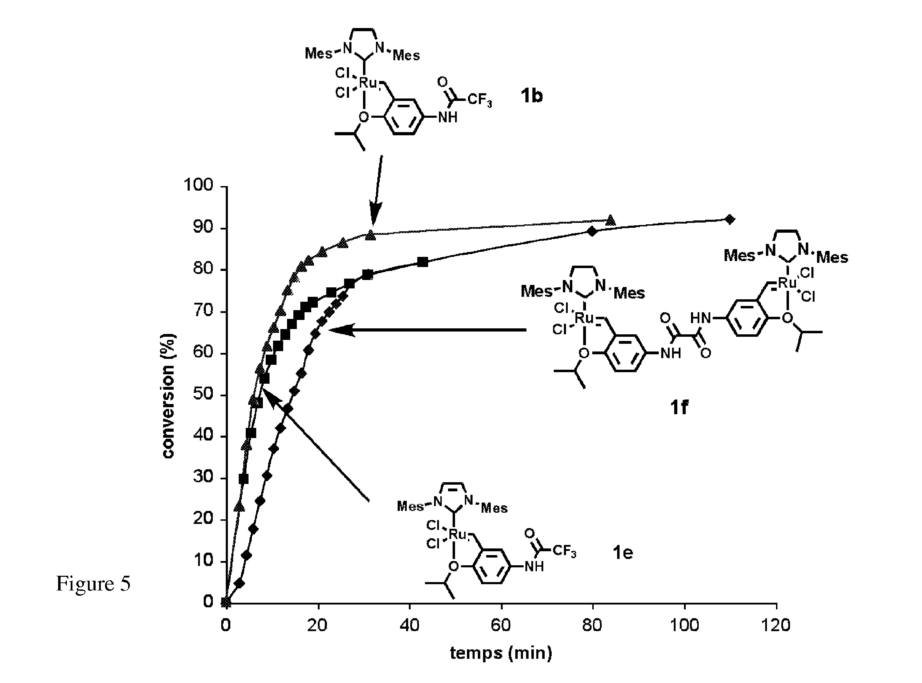

- la figure 5 est un graphique montrant le taux de conversion dans le temps d'un composé métallyle-allyle diéthylmalonate dans le cadre d'une réaction de métathèse cyclisante à 30°C, en présence de 1 mol % des complexes catalytiques selon l'invention **1b, 1e** et **1f :**

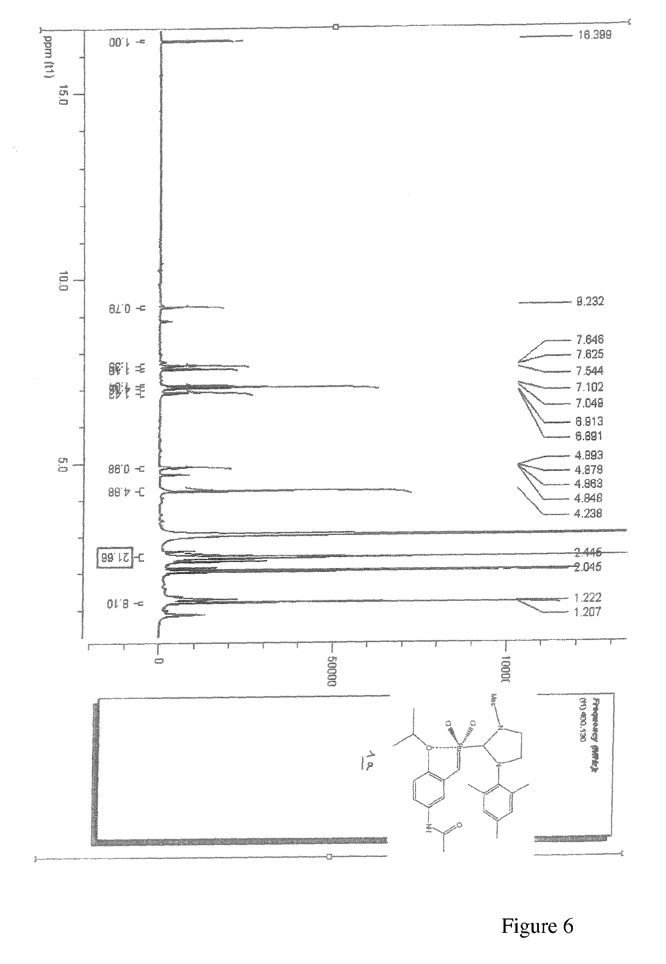

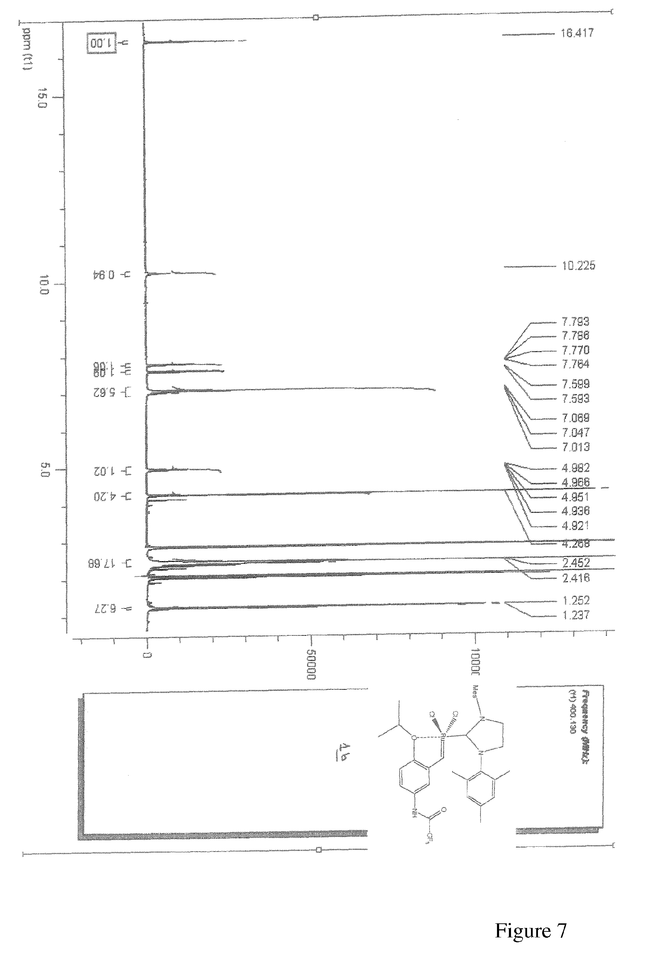

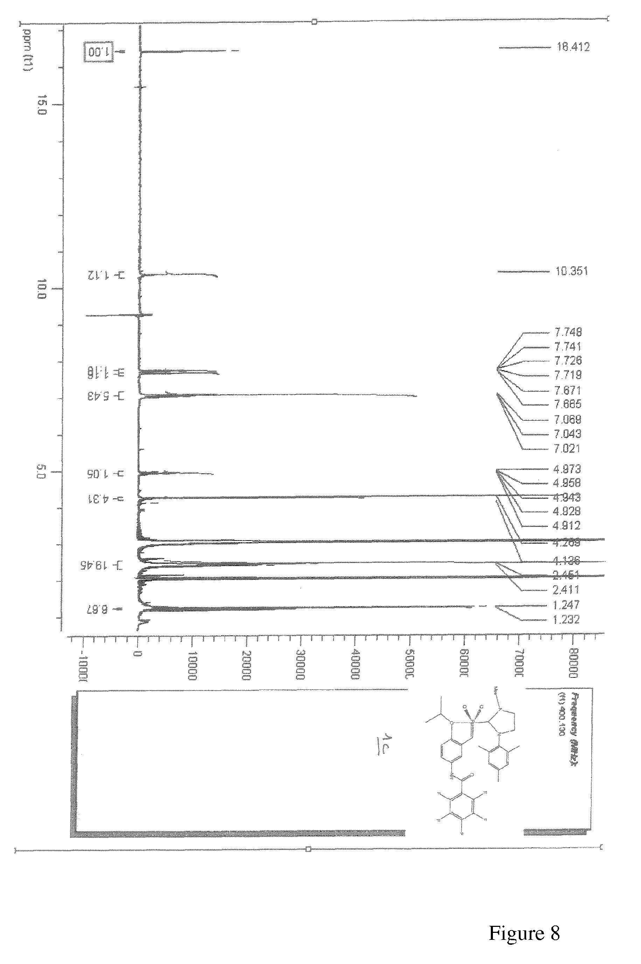

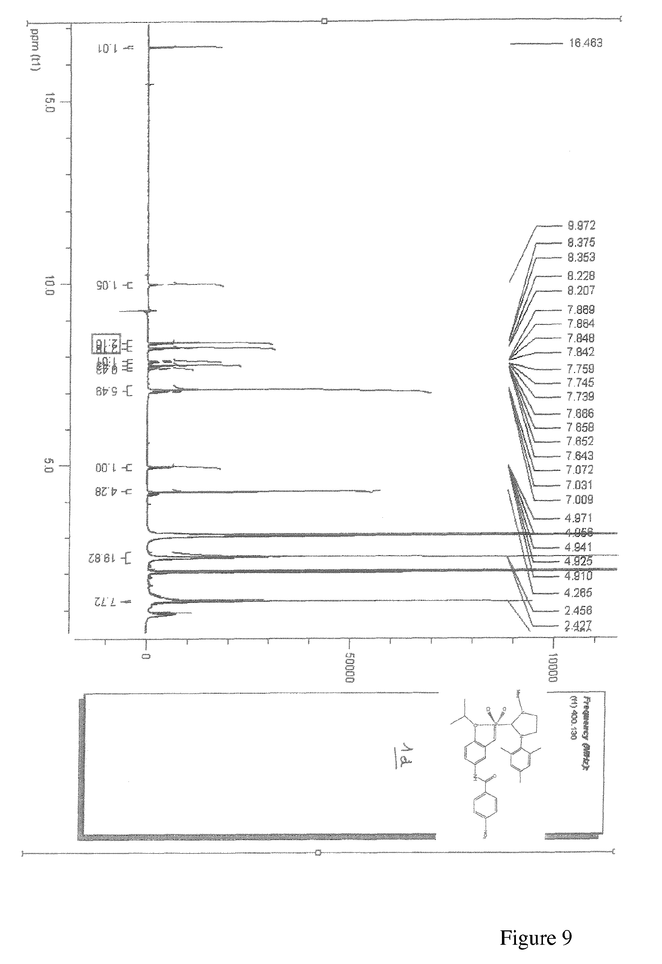

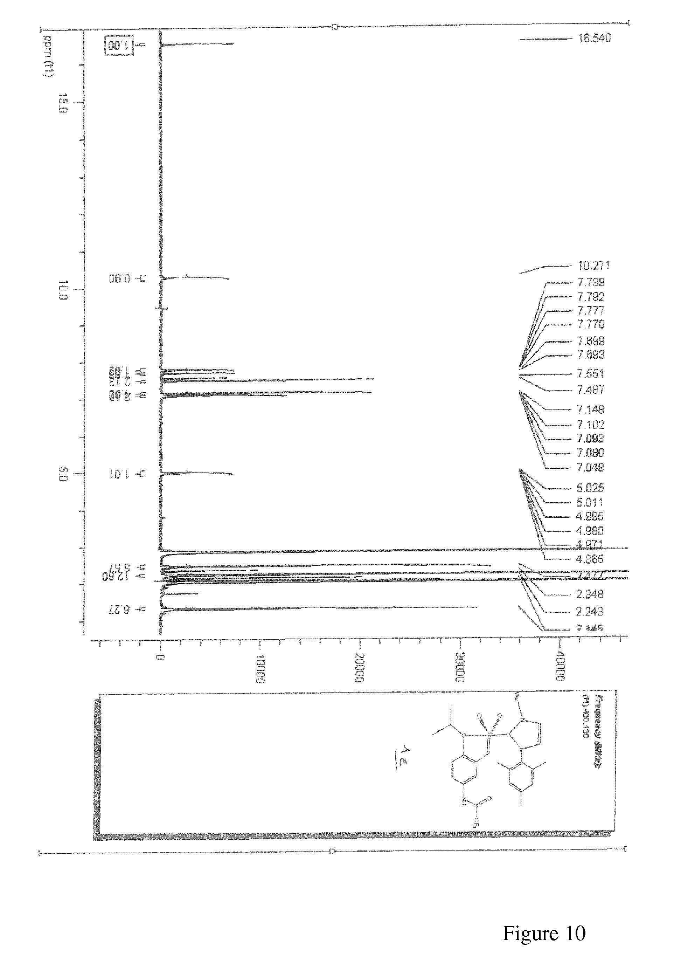

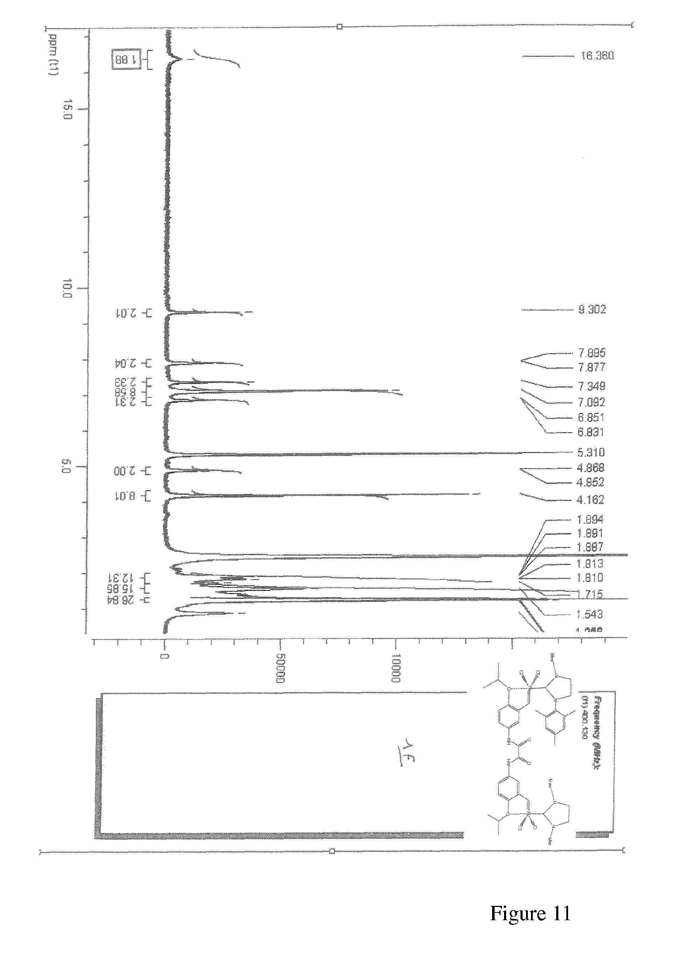

- les figures 6 à 11 représentent les spectres RMN d'exemples de réalisation de différents complexes de ruthénium **1a, 1b, 1e, 1d, 1e et 1f ;**

Dans un premier temps, la synthèse des différents exemples de complexes selon l'invention est décrite ci-après.

Les complexes **1a, 1b, 1e, 1d, 1e et 1f** selon l'invention sont obtenus en deux étapes à partir de l'aniline fonctionnalisée **5.**

Le procédé de synthèse en 4 étapes de cette aniline fonctionnalisée **5** à partir du para-nitro-phénol est décrit dans l'article *"*Activated pyridinium-tagged ruthenium complex as efficient catalyst for Ring-Closing Metathesis." D. Rix, H. Clavier, Y. Coutard, L. Gulajski, K. Grela*, M. Mauduit*, J. Organomet. Chem., 2006, 691, 5397-5405.

Le schéma suivant résume cette synthèse en deux étapes :

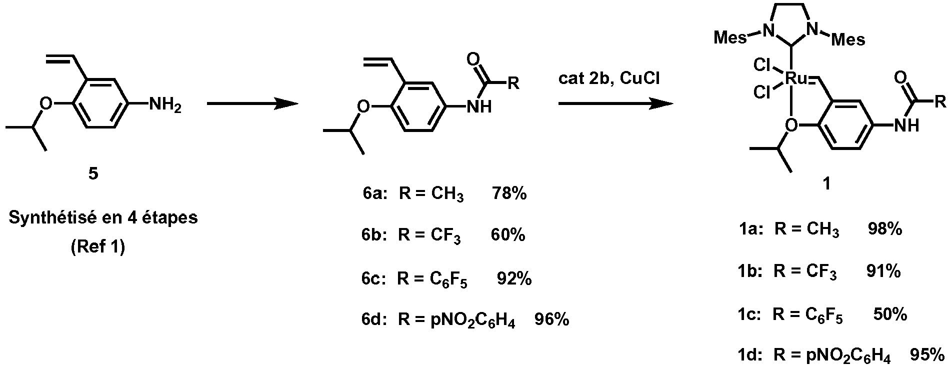

### 1ère étape : synthèse des amides 6a, 6b, 6c, 6d, 6f, 9a, 9b, 10a et 10b à partir de la 4-isopropoxy-3-vinylaniline 5.

Selon une procédure générale, le 4-isopropoxy-3-vinylaniline **5** (1éq. ; 0,2mmol env.) est introduit dans un ballon, placé sous azote, et mis en solution dans le dichlorométhane anhydre (2-3mL). La pyridine (1,5éq.) est ajoutée à la solution qui est alors refroidie à 0°C. Le chlorure d'acyle ou l'anhydride (1,2éq.) est alors additionné lentement puis le milieu réactionnel est agité à température ambiante, sous azote pendant 2h.

Le brut est alors dilué au dichlorométhane (10mL), lavé avec une solution aqueuse d'acide chlorhydrique 1N (2mL) puis avec une solution saturée d'hydrogénocarbonate de sodium (2x2mL) et enfin avec une solution de chlorure de sodium saturée (3x2mL). Les phases organiques sont rassemblées, séchées sur sulfate de magnésium et concentrées sous vide.

Le résidu est purifié par chromatographie sur gel de silice.

### Synthèse du composé N-(4-isopropoxy-3-vinylphényl)acétamide 6a

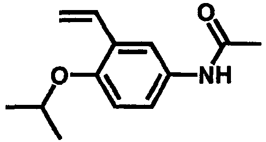

En utilisant la procédure générale d'obtention des amides à partir de la 4-isopropoxy-3-vinylaniline **5** (50mg; 0,3mmol) et avec le chlorure d'acétyle (15 µL), l'acétamide est obtenu après chromatographie sur gel de silice (éludant : CH₂Cl₂/AcOEt (4:1)) sous la forme d'un solide rosé (49mg, 78%).
**Rf** (CH₂Cl₂/AcOEt (4:1)) = 0,48
**RMN ¹H** (400MHz, CDCl₃) δ(ppm) : 7,54 (s, 1H, NH); 7,51 (d, 1H, ⁴J = 2,7Hz, H*₇*); 7,38 (dd, 1H, ³J = 8,8Hz, ⁴J = 2,7Hz, H*₅*); 6,99 (dd, 1H, ³J_{cis} = 11,2Hz, ³Jₜᵣₐₙₛ = 17,8Hz, H*₉*); 6,81 (d, 1H, ³J = 8,8Hz, H*₄*); 5,68 (dd, 1H, ²J_{gem} = 1,4Hz, ³Jₜᵣₐₙₛ = 17,8Hz, H*₁₀ₐ*); 5,22 (dd, 1H, ²J_{gem} = 1,4Hz, ³J_{cis} = 11,2Hz, H*_{10b}*); 4,45 (sept., 1H, ³J = 6,1Hz, H*₂*); 2,14 (s, 3H, H*₁₁*); 1,31 (d, 6H, ³J = 6,1Hz, H*₁*)
**RMN ¹³C** (100MHz, CDCl₃) δ(ppm) : 168,4 (C=O); 152,0 (C3); 131,4 (C9); 131,1 (C8); 128,3 (C6); 121,2 (C7); 118,6 (C5); 115,1 (C4); 114,5 (C10); 71,4 (C2); 24,3 (C11); 22,1 (C1)

### Synthèse du composé N-(4-isopropoxy-3-vinylphényl)trifluoroacétamide 6b

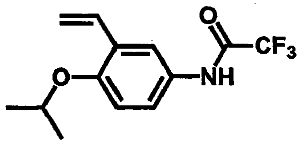

En utilisant la procédure générale d'obtention des amides à partir de la 4-isopropoxy-3-vinylaniline **5** (26mg; 0,14mol) et avec l'anhydride trifluoroacétique (25 µL), le trifluoroacétamide est obtenu après chromatographie sur gel de silice (éluant : CH₂Cl₂/EP (9:1)) sous la forme d'un solide jaunâtre (23mg, 59%).
**Rf** (CH₂Cl₂/EP (9:1)) = 0,65
**RMN ¹H** (400MHz, CDCl₃) δ(ppm) : 7,93 (s, 1H, NH); 7,59 (d, 1H, ⁴J = 2,7Hz, H*₇*); 7,44 (dd, 1H, ³J = 8,9Hz, ⁴J = 2,7Hz, H*₅*); 7,01 (dd, 1H, ³J_{cis} = 11,2Hz, ³Jₜᵣₐₙₛ = 17,8Hz, H*₉*); 6,88 (d, 1H, ³J = 8,9 Hz, H₄); 5,74 (dd, 1H, ²J_{gem} = 1,3Hz, ³Jₜᵣₐₙₛ = 17,9Hz, H*₁₀ₐ*); 5,28 (dd, 1H, ²J_{gem} = 1,3Hz, ³J_{cis} = 11,2Hz, H*_{10b}*); 4,53 (sept., 1H, ³J = 6,1Hz, H₂); 1,35 (d, 6H, ³J = 6,1Hz, H*₁*)
**RMN ¹⁹F** (376,5MHz, CDCl₃) δ(ppm) : -76,1 (s, 3F, F₁₄)
**RMN ¹³C** (100MHz, CDCl₃) δ(ppm) : 155,7 (quad., ²J_{C-F} = 37Hz, C=O); 153,3 (C3); 131,0 (C9); 128,7 (C8); 127,9 (C6); 121,2 (C7); 119,0 (C5); 115,8 (quad., ¹J_{C-F} = 288Hz, C11); 115,3 (C4); 114,7 (C10); 71,3 (C2); 22,1 (C1)

### Synthèse du composé N-(4-isopropoxy-3-vinylphényl)pentafluorobenzamide 6c

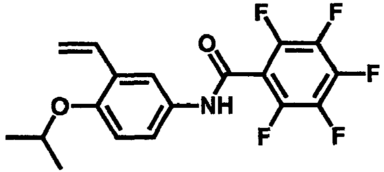

En utilisant la procédure générale d'obtention des amides à partir de la 4-isopropoxy-3-vinylaniline **5** (39mg ; 0,22mmol) et avec le chlorure de pentafluorobenzoyle (38 µL), le pentafluorobenzamide est obtenu après chromatographie sur gel de silice (éluant : CH₂Cl₂/EP (9:1)) sous la forme d'un solide rose (75mg, 92%).
**Rf** (CH₂Cl₂/EP (9:1)) = 0,71
**RMN ¹H** (400MHz, CDCl₃) δ(ppm) : 7,70 (s, 1H, NH); 7,59 (d, 1H, ⁴J = 2,7Hz, H₇); 7,46 (dd, 1H, ³J = 8,9Hz, ⁴J = 2,7Hz, H₅); 7,02 (dd, 1H, ³J_{cis} = 11,2Hz, ³Jₜᵣₐₙₛ = 17,8Hz, H₉); 6,87 (d, 1H, ³J = 8,9 Hz, H*₄*); 5,73 (dd, 1H, ²J_{gem} = 1,3Hz, ³Jₜᵣₐₙₛ = 17,9Hz, H*₁₀ₐ*); 5,27 (dd, 1H, ²J_{gem} = 1,3Hz, ³J_{cis} = 11,2Hz, *H_{10b}*); 4,52 (sept., 1H, ³J = 6,1Hz, H₂); 1,35 (d, 6H, ³J = 6,1Hz, H*₁*)
**RMN ¹⁹F** (376,5MHz, CDCl₃) δ(ppm) : -140,5 (d, 2F, ³J_{F-F} = 16Hz, F*₁₂*); -150,5 (t, 1F, ³J_{F-F} = 20Hz, F*₁₄*); -160,1 (dt, 2F, ³J_{F-F} = 20Hz, ³J_{F-F} = 15Hz,F*₁₃*)
**RMN ¹³C** (100MHz, CDCl₃) δ(ppm) : 155,2 (C=O); 152,9 (C3); 145,5-142,9-138,9-136,4 (C12, C13, C14); 131,1 (C9); 129,6 (C8); 128,6 (C6); 121,2 (C7); 119,0 (C5); 115,1 (C4); 114,8 (C10); 111,6 (C11); 71,4 (C2); 22,1 (C1)

### Synthèse du composé N-(4-isopropozy-3-vinylphényl)paranitrobenzamide 6d

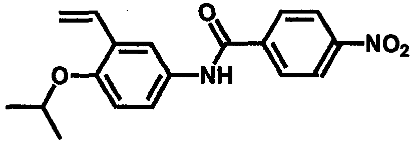

En utilisant la procédure générale d'obtention des amides à partir de la 4-isopropoxy-3-vinylaniline **5** (38mg ; 0,22mmol) et avec le chlorure de *para*nitrobenzoyle (48mg), le *para*nitrobenzamide est obtenu après chromatographie sur gel de silice (éluant : CH₂Cl₂) sous la forme d'un huile jaune (67mg, 96%).
**Rf** (CH₂Cl₂) = 0,43
**RMN ¹H** (400MHz, CDCl₃) δ(ppm) : 8,44 (s, 1H, NH); 8,17 (d, 2H, ³J = 8,8Hz, H₁₂); 7,96 (d, 2H, ³J = 8,8Hz, H₁₃); 7,61 (d, 1H, ⁴J = 2,5Hz, H*₇*); 7,45 (dd, 1H, ³J = 8,8Hz, ⁴J = 2,5Hz, H*₅*); 6,97 (dd, 1H, ³J_{cis} = 11,2Hz, ³Jₜᵣₐₙₛ = 17,8Hz, H*₉*); 6,80 (d, 1H, ³J = 8,8 Hz, H*₄*); 5,63 (dd, 1H, ²J_{gem} = 1,3Hz, ³Jₜᵣₐₙₛ = 17,7Hz, H*₁₀ₐ*); 5,20 (dd, 1H, ²J_{gem} = 1,3Hz, ³J_{cis} = 11,1Hz, H*_{10b}*); 4,48 (sept., 1H, ³J = 6,1Hz, H*₂*); 1,33 (d, 6H, ³J = 6,1Hz, H*₁*)
**RMN ¹³C** (100MHz, CDCl₃) δ(ppm) : 164,0 (C=O); 152,7 (C3); 149,4 (C14) ; 140,3 (C11); 131,2 (C9); 130,1 (C8); 128,3 (C6); 128,2 (C12); 123,7 (C13); 121,8 (C7); 119,4 (C5); 114,7 (C4); 114,6 (C10); 71,2 (C2); 22,0 (C1)

### Synthèse du composé N,N'-bis(4-isopropozy-3-vinylphényl)ozamide 6f

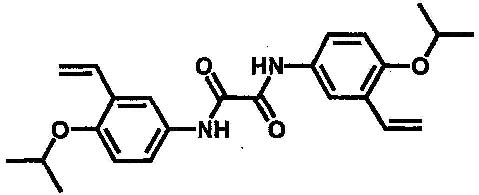

Le 4-isopropoxy-3-vinylaniline **5** (30m ; 1éq. ; 0,2mmol) est introduit dans un ballon, placé sous azote, et mis en solution dans le dichlorométhane anhydre (3mL). La pyridine (21 µL, 1,5éq.) est ajoutée à la solution qui est alors refroidie à 0°C. Le chlorure d'oxalyle (8,8 µL ; 1,2éq.) est alors additionné lentement puis le milieu réactionnel est agité à température ambiante, sous azote pendant 2h.

Le brut est alors dilué au dichlorométhane (10mL), lavé avec une solution aqueuse d'acide chlorhydrique 1N (2mL) puis avec une solution saturée d'hydrogénocarbonate de sodium (2x2mL) et enfin avec une solution de chlorure de sodium saturée (3x2mL). Les phases organiques sont rassemblées, séchées sur sulfate de magnésium et concentrées sous vide.

Le résidu est purifié par chromatographie sur gel de silice (éluant : CH₂Cl₂/EP (9:1)) pour conduire au composé **6f** attendu sous la forme d'un solide blanc (14mg, 20%).
**Rf** (CH₂Cl₂/EP (9:1)) = 0,66
**RMN ¹H** (400MHz, CDCl₃) δ(ppm) : 9,30 (s, 2H, NH); 7,75 (d, 2H, ⁴J = 2,7Hz, H*₇*); 7,55 (dd, 2H, ³J = 8,9Hz, ⁴J = 2,7Hz, H₅); 7,04 (dd, 2H, ³J_{cis} = 11,2Hz, ³Jₜᵣₐₙₛ = 17,8Hz, H*₉*); 6,89 (d, 2H, ³J = 8,9 Hz, H*₄*); 5,76 (dd, 2H, ²J_{gem} = 1,3Hz, ³Jₜᵣₐₙₛ = 17,9Hz, H*₁₀ₐ*); 5,29 (dd, 2H, ²J_{gem} = 1,3Hz, ³J_{cis} = 11,2Hz, H*_{10b}*); 4,53 (sept., 2H, ³J = 6,1Hz, H*₂*); 1,35 (d, 112H, ³J = 6,1Hz, H*₁*)
**RMN ¹³C** (100MHz, CDCl₃) δ(ppm) : 157,3 (C=O); 152,8 (C3); 131,2 (C9); 129,4 (C8); 128,6 (C6); 120,4 (C7); 118,2 (C5); 115,1 (C4); 114,9 (C10); 71,3 (C2); 22,1 (C1)

### Synthèse du composé N-(4-isopropoxy-3-vinylphényl)difluorochloroacétamide 9a

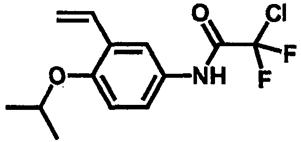

En utilisant la procédure générale d'obtention des amides à partir de la 4-isopropoxy-3-vinylaniline **5** (50mg; 0,3mmol) et avec l'anhydride 2-chloro-2,2-difluoroethanoique (63 µL), l'acétamide est obtenu après chromatographie sur gel de silice (éluant : CH₂Cl₂/AcOEt (4:1)) sous la forme d'un solide rosé (65mg, 75%).
**Rf** (CH₂Cl₂/EP (4:1)) = 0,75
**RMN ¹H** (400MHz, CDCl₃) δ(ppm): 7,54 (s, 1H, NH); 7,59 (d, 1H, ⁴J = 2,7Hz, H*₇*); 7,43 (dd, 1H, ³J = 8,8Hz, ⁴J = 2,7Hz, H*₅*); 6,99 (dd, 1H, ³J_{cis} = 11,2Hz, ³Jₜᵣₐₙₛ = 17,8Hz, H*₉*); 6,86 (d, 1H, ³J = 8,8Hz, H*₄*); 5,70 (dd, 1H, ²J_{gem} = 1,4Hz, ³Jₜᵣₐₙₛ = 17,8Hz, H*₁₀ₐ*); 5,27 (dd, 1H, ²J_{gem} = 1,4Hz, ³J_{cis} = 11,2Hz, H*_{10b}*); 4,50 (sept., 1H, ³J = 6,1Hz, H*₂*); 1,34 (d, 6H, ³J = 6,1Hz, H*₁*)
**RMN ¹⁹F** (376,5MHz, CDCl₃) δ(ppm) : -64,3 (s, 2F, CF₂)
**RMN ¹³C** (100MHz, CDCl₃) δ(ppm) : 158,8 (C=O); 153,2 (C3); 131,0 (C9); 128,6 (C8); 128,1 (C6); 122,2 (CF₂Cl); 121,2 (C5); 119,1 (C4); 116,2 (CF₂Cl); 114,7 (C10); 71,3 (C2); 22,0 (C1)

### Synthèse du composé 3-{1,1-difluoro-2-[4-isopropoxy-3-vinylphenylamino]-2-oxoethyl}-1-methyl-1H-imidazol-3-ium 9c

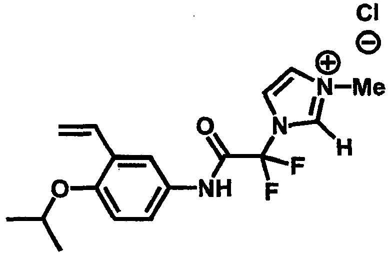

L'amide chloré **9a** (20mg ; 0,07mmol) est mis en solution dans le toluène anhydre (2,5mL). Le N-méthylimidazole (1mL ; 20éq.) est ajouté à la solution qui est alors portée à reflux pendant une nuit. Les phases volatiles sont alors éliminées sous pression réduite et le composé taggé est récupéré sous la forme d'une huile orange sombre.
**RMN ¹H** (400MHz, CDCl₃) δ(ppm) : 9,49 (s, 1H, NH); 7,67 (d, 1H, ⁴J = 2,7Hz, H*₇*); 7,48 (dd, 1H, ³J = 8,8Hz, ⁴J = 2,7Hz, H*₅*); 7,43 (s, 1H, H₁₁); 7,04 (s, 1H, H₁₂) ; 7,00 (dd, 1H, ³J_{cis} = 11,2Hz, ³Jₜᵣₐₙₛ = 17,8Hz, H*₉*); 6,89 (s, 1H, H₁₃) ; 6,86 (d, 1H, ³J = 8,8Hz, H*₄*); 5,70 (dd, 1H, ²J_{gem} = 1,4Hz, ³Jₜᵣₐₙₛ = 17,8Hz, H*₁₀ₐ*); 5,25 (dd, 1H, ²J_{gem} = 1,4Hz, ³J_{cis} = 11,2Hz, H*_{10b}*); 4,52 (sept., 1H, ³J = 6,1Hz, H₂); 3,68 (s, 3H, H₁₄) ;1,33 (d, 6H, ³J = 6,1Hz, H*₁*)
**RMN ¹⁹F** (376,5MHz, CDCl₃) δ(ppm) : -64,0 (s, 2F, CF₂)
**RMN ¹³C** (100MHz, CDCl₃) δ(ppm) : 157,2 (C=O); 153,0 (C3); 131,1 (C9, C11) ; 128,8 (C8); 128,4 (C6); 121,5 (C5); 119,3 (C4); 119,1 (CF₂); 114,8 (C10); 114,6 (C7); 71,3 (C2); 33,3 (C14) ; 22,0 (C1)

### Synthèse du composé 3-chloro-2,2,3,3-tetrafluoro-N-(4-isopropoxy-3 vinylphenyl)propanamide 9b

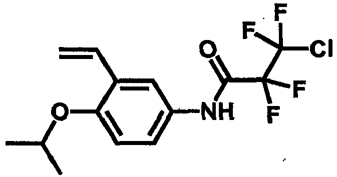

En utilisant la procédure générale d'obtention des amides à partir de la 4-isopropoxy-3-vinylaniline **5** (50mg; 0,3mmol) et avec le chlorure de 3-chloro-2,2,3,3-tetrafluoropropanoyl (81mg), l'acétamide est obtenu après chromatographie sur gel de silice (éluant : CH₂Cl₂/AcOEt (4:1)) sous la forme d'un solide blanc (65mg, 57%).
**Rf** (CH₂Cl₂/AcOEt (9:1)) = 0,3
**RMN ¹H** (400MHz, CDCl₃) δ(ppm) : 8,00 (s, 1H, NH); 7,62 (d, 1H, ⁴J = 2,7Hz, H*₇*); 7,44 (dd, 1H, ³J = 8,8Hz, ⁴J = 2,7Hz, H*₅*); 7,00 (dd, 1H, ³J_{cis} = 11,2Hz, ³Jₜᵣₐₙₛ = 17,8Hz, H*₉*); 6,86 (d, 1H, ³J = 8,8Hz, H*₄*); 5,72 (dd, 1H, ²J_{gem} = 1,4Hz, ³Jₜᵣₐₙₛ = 17,8Hz, H*₁₀ₐ*); 5,28 (dd, 1H, ²J_{gem} = 1,4Hz, ³J_{cis} = 11,2Hz, H*_{10b}*); 4,52 (sept., 1H, ³J = 6,1Hz, H*₂*); 1,34 (d, 6H, ³J = 6,1Hz, H*₁*)
**RMN ¹⁹F** (376,5MHz, CDCl₃) δ(ppm) : -70,1 (s, 2F, F*₁₁*); -118,6 (s, 2F, F*₁₂*)
**RMN ¹³C** (100MHz, CDCl₃) δ(ppm) : 155,7 (C=O); 153,3 (C3); 130,9 (C9); 128,6 (C8); 128,1 (C6); 124,8 (CF₂CO); 121,2 (C5); 119,0 (C4); 115,2 (C10); 114,2 (C7); 108,1 (CF₂Cl); 71,3 (C2); 22,0 (C1)

### 2^{ème} étape : synthèse des complexes de ruthénium 1a, 1b, 1e, 1d, 1e, 1f, 11, 12 à partir des amides 6a, 6b, 6c, 6d, 6f, 10b.

Selon une procédure générale, le ligand amide (1éq.), le chlorure de cuivre (I) (1éq) et le précatalyseur indènylidène (1éq.) sont introduits dans un ballon sous argon. Le dichlorométhane anhydre (2-3mL) y est ajouté. Le milieu réactionnel est alors dégazé trois fois, placé à 30-33°C sous atmosphère d'argon et maintenu sous agitation pendant 5h environ.

Le brut réactionnel est alors concentré sous vide. Le résidu est repris à l'acétone (1-2mL) et filtré sur Célite. Le filtrat est concentré sous vide et le résidu est purifié par chromatographie sur gel de silice.

### Synthèse du complexe de ruthénium 1a

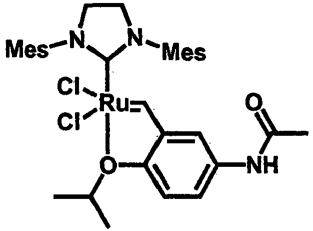

En utilisant la procédure générale d'obtention des complexes de ruthénium avec le N-(4-isopropoxy-3-vinylphényl)acétamide **6a** (24mg ; 0,011mmol), le complexe **1a** est obtenu après chromatographie sur gel de silice (éluant : EP/Acétone (1:1)) sous la forme d'un solide vert (73mg ; 98%).
**Rf** (EP/Acétone (1:1))= 0,52
**RMN ¹H (400MHz,** (CD₃)₂CO) δ(ppm) : 16,42 (s, 1H, H₉); 10,23 (s, 1H, NH); 7,78 (d, 1H, ³J = 8,6Hz, H₅); 7,55 (s, 1H, H₇); 7,05 (s, 4H, H₁₂); 6,91 (d, 1H, ³J = 8,6Hz, H₄); 4,88 (sept., 1H, ³J = 6,1Hz, H₂); 4,24 (s, 4H, H₁₀); 2,45 (m, 18H, H₁₁, H₁₃); 2,09 (s, 3H, H₁₄); 1,22 (d, 6H, ³J = 6,1Hz, H₁)

### Synthèse du complexe de ruthénium 1b

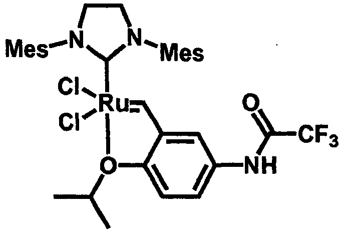

En utilisant la procédure générale d'obtention des complexes de ruthénium avec le N-(4-isopropoxy-3-vinylphényl)trifluoroacétamide **6b** (11,7mg ; 0,04mmol), le complexe **1b** est obtenu après chromatographie sur gel de silice (éluant : EP/Acétone (7:3)) sous la forme d'un solide vert (26,1mg ; 88%).
**Rf** (EP/Acétone (3:2))= 0,37
**RMN ¹⁹F** (376,5MHz, (CD₃)₂CO) δ(ppm) : -76,5 (s, 3F, F₁₄)
**RMN ¹H** (400MHz, (CD₃)₂CO) δ(ppm): 16,40 (s, 1H, H₉); 9,24 (s, 1H, NH); 7,64 (dd, 1H, ³J = 8,6Hz, ⁴J = 2,8Hz, H₅); 7,55 (d, 1H, ⁴J = 2,8Hz, H₇); 7,05 (s, 4H, H₁₂); 7,01 (d, 1H, ³J = 8,6Hz, H₄); 4,95 (sept., 1H, ³J = 6,1Hz, H₂); 4,27 (s, 4H, H₁₀); 2,43 (m, 18H, H₁₁, H₁₃); 1,22 (d, 6H, ³J = 6,1Hz, H₁)

### Synthèse du complexe de ruthénium 1c

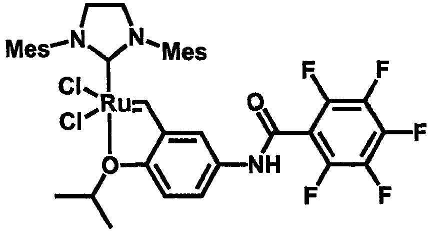

En utilisant la procédure générale d'obtention des complexes de ruthénium avec le N-(4-isopropoxy-3-vinylphényl)pentafluorobenzamide **6c** (9mg ; 0,02mmol), le complexe **1c** est obtenu après chromatographie sur gel de silice (éluant : EP/Acétone (7:3)) sous la forme d'un solide vert (10mg ; 50%).
**Rf** (EP/Acétone (7:3))= 0,41
**RMN¹⁹F** (376,5MHz, (CD₃)₂CO) δ(ppm) : -143,6 (d, 2F, ³J_{F-F} = 15Hz, F₁₅); -155,2 (t, 1F, ³J_{F-F} = 20Hz, F*₁₇*); -16,5 (dt, 2F, ³J_{F-F}= 20Hz, ³J_{F-F} = 15Hz,F*₁₆*)
**RMN ¹H** (400MHz, (CD₃)₂CO) δ(ppm) : 16,41 (s, 1H, H₉); 10,35 (s, 1H, NH); 7,75 (dd, 1H, ³J = 8,6Hz, ⁴J = 2,8Hz, H₅); 7,67 (d, 1H, ⁴J = 2,8Hz, H₇); 7,07 (s, 4H, H₁₂); 7,03 (d, 1H, ³J = 8,6Hz, H₄); 4,95 (sept., 1H, ³J = 6,1Hz, H₂); 4,27 (s, 4H, H₁₀); 2,43 (m, 18H, H₁₁, H₁₃); 1,22 (d, 6H, 3J = 6,1Hz, H₁)

### Synthèse du complexe de ruthénium 1d

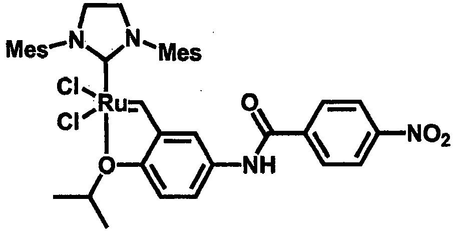

En utilisant la procédure générale d'obtention des complexes de ruthénium avec le N-(4-isopropoxy-3-vinylphényl)*para*nitrobenzamide **6d** (8mg ; 0,02mmol), le complexe **1d** est obtenu après chromatographie sur gel de silice (éluant : EP/Acétone (6:4)) sous la forme d'un solide vert (18mg ; 95%).
**Rf** (EP/Acétone (7:3))= 0,34
**RMN ¹H** (400MHz, (CD₃)₂CO) δ(ppm) : 16,46 (s, 1H, H₉); 9,97 (s, 1H, NH); 8,36 (d, 2H, ³J = 8,8Hz, H₁₅); 8,21 (d, 2H, ³J = 8,8Hz, H₁₆) ; 7,85 (dd, 1H, ³J = 8,6Hz, ⁴J = 2,8Hz, H₅); 7,74 (d, 1H, ⁴J = 2,8Hz, H₇); 7,07 (s, 4H, H₁₂); 7,02 (d, 1H, ³J = 8,6Hz, H₄); 4,95 (sept., 1H, ³J = 6,1Hz, H₂); 4,27 (s, 4H, H₁₀); 2,43 (m, 18H, H₁₁, H₁₃); 1,24 (d, 6H, ³J = 6,1Hz, H₁)

### Synthèse du complexe de ruthénium 1e

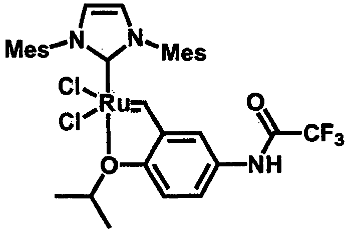

Le ligand N-(4-isopropoxy-3-vinylphényl)trifluoroacétamide **6b** (22mg ; 0,08mmol ; 1éq.), le chlorure de cuivre (I) (8mg, 1éq) et le précatalyseur de Nolan de 2^{ème} génération (68mg, 1éq.) de formule **2c** sont introduits dans un ballon sous argon. Le dichlorométhane anhydre (3mL) y est ajouté. Le milieu réactionnel est alors dégazé trois fois, placé à 30-33°C sous atmosphère d'argon et maintenu sous agitation pendant 5h environ.

Le brut réactionnel est alors concentré sous vide. Le résidu est repris à l'acétone (1-2mL) et filtré sur Célite. Le filtrat est concentré sous vide et le résidu est purifié par chromatographie sur gel de silice.

Le complexe **1e** est obtenu après chromatographie sur gel de silice (éluant : EP/Acétone (4:1)) sous la forme d'un solide vert (52mg ; 88%).
**Rf** (EP/Acétone (1:1))= 0,13
**RMN¹⁹F** (376,5MHz, (CD₃)₂CO) δ(ppm) : -76,5 (s, 3F, F₁₄)
**RMN ¹H** (400MHz, (CD₃)₂CO) δ(ppm) : 16,54 (s, 1H, H₉); 10,44 (s, 1H, NH); 7,79 (dd, 1H, ³J = 8,6Hz, ⁴J = 2,6Hz, H₅); 7,68 (d, 1H, ⁴J = 2,6Hz, H₇); 7,48 (s, 2H, H₁₀); 7,14 (s, 4H, H₁₂); 7,09 (m, 1H, H₄); 4,99 (sept., 1H, ³J = 6,1Hz, H₂); 2,47 (s, 6H, H₁₃); 2,24 (s, 12H, H₁₁) ; 1,31 (d, 6H, ³J = 6, 1Hz, H₁)

### Synthèse du complexe de ruthénium 1f

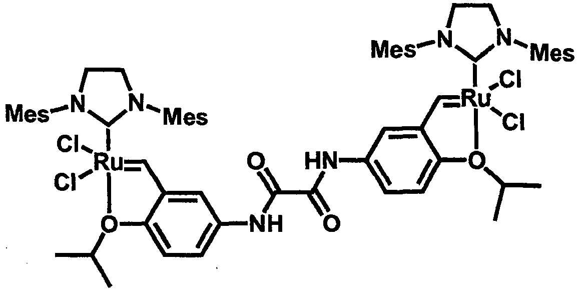

Le ligand N,N'-bis(4-isopropoxy-3-vinylphényl)oxamide **6f** (8mg ; 0,02mol ; 1éq.), le chlorure de cuivre (I) (4mg, 2,1éq) et le précatalyseur indénylidène (37mg, 2,1éq) sont introduits dans un ballon sous argon. Le dichlorométhane anhydre (5mL) y est ajouté. Le milieu réactionnel est alors dégazé trois fois, placé à 30-33°C sous atmosphère d'argon et maintenu sous agitation pendant 5h environ.

Le brut réactionnel est alors concentré sous vide. Le résidu est repris à l'acétone (2mL) et filtré sur fritté. Le complexe **1f** est ainsi isolé sous la forme d'un solide vert (15mg; 59%).
**RMN ¹H** (400MHz, CD₂Cl₂) δ(ppm): 16,36 (s, 2H, H₉); 9,30 (s, 2H, NH); 7,89 (d, 2H, ³J = 7,8Hz, H₅); 7,35 (s, 2H, H₇); 7,09 (s, 8H, H₁₂); 6,84 (d, 2H, ³J = 8,0Hz, H₄); 4,86 (m, 2H, H₂); 4,16 (s, 8H, H₁₀) ; 1,86 (m, 36H, H₁₁, H₁₃) ; 1,23 (d, 12H, ³J = 6,1Hz, H₁)

### Synthèse du complexe de ruthénium marqué 11

La fonction trifluroacétamide étant clairement identifiée comme étant la fonction la plus apte à activer le précatalyseur, l'introduction d'un motif ionique (tag ionique) peut alors être réalisée.

Pour cela, la présente invention propose de substituer l'atome de chlore du composé 10a par une amine tertiaire (imidazole, pyridine ...).

Ainsi, les inventeurs ont réalisé la substitution par la pyridine sur le 4-chloro-*N*-(4-isopropoxy-3-vinylphenyl)butanamide **10a** pour conduire aisément au ligand ionique désiré **10b.** Sa complexation avec le catalyseur de Grubbs II conduit au complexe **11.**

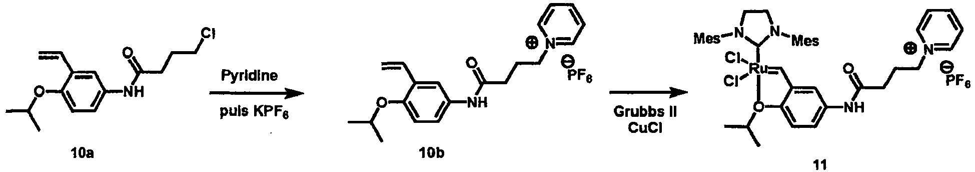

### Synthèse du composé 4-chloro-N-(4-isopropoxy-3-vinylphenyl)butanamide 10a

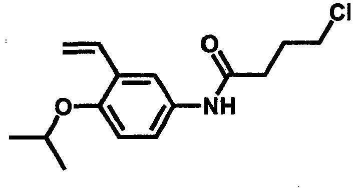

En utilisant la procédure générale d'obtention des amides à partir de la 4-isopropoxy-3-vinylaniline **5** (50mg; 0,3mmol) et avec le chlorure de 3-chloropropanoyl (15□L), l'acétamide est obtenu après chromatographie sur gel de silice (éluant : CH₂Cl₂) sous la forme d'un solide rosé (52mg, 65%).
**Rf** (CH₂Cl₂) = 0,3
**RMN ¹H** (400MHz, CDCl₃) δ(ppm) : 7,81 (s, 1H, NH); 7,54 (d, 1H, ⁴J = 2,7Hz, H₇); 7,34 (dd, 1H, ³J = 8,8Hz, ⁴J = 2,7Hz, H₅); 6,98 (dd, 1H, ³J_{cis} = 11,2Hz, ³Jₜᵣₐₙₛ = 17,8Hz, H₉); 6,79 (d, 1H, ³J = 8,8Hz, H*₄*); 5,67 (dd, 1H, ²J_{gem} = 1,4Hz, ³Jₜᵣₐₙₛ = 17,8Hz, H*₁₀ₐ*); 5,21 (dd, 1H, ²J_{gem} = 1,4Hz, ³J_{cis} = 11,2Hz, H*_{10b});* 4,44 (sept., 1H, ³J = 6,1Hz, H₂); 3,60 (t, 2H, ³J = 7,1Hz, CH₂Cl); 2,48 (t, 2H, ³J = 7,1Hz, H*₁₂*); 2,14 (m, 2H, H*₁₁*); 1,31 (d, 6H, ³J = 6,1Hz, H*₁*) **RMN ¹³C** (100MHz, CDCl₃) δ(ppm) : 170,1 (C=O); 152,0 (C3); 131,3 (C9); 130,8 (C8); 128,3 (C6); 121,1 (C7); 118,6 (C5); 115,0 (C4); 114,5 (C10); 71,4 (C2); 44,4 (C13); 33,8 (C12); 27,9 (C11); 22,0 (C1)

### Synthèse du composé 1-(4-(4-isopropozy-3-vinylphenylamino)-4-ozobutyl)pyridinium hexafluorophosphate(V) 10b

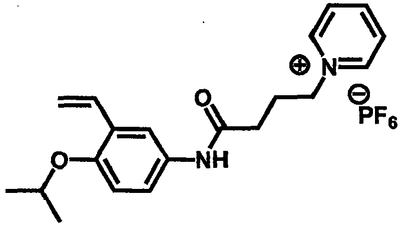

A une solution d'acétamide **10a** (52mg, 0,19 mmol) dans le toluène anhydre est ajoutée la pyridine (1 mL) puis le mélange est porté au reflux sous agitation pendant 2 jours. Apres évaporation du solvant, le résidu est dissous dans l'eau puis du KPF₆ (38 mg) est ajouté. Apres 2h d'agitation à température ambiante, la phase aqueuse est extraite au dichlorométhane puis les phases organiques sont lavées avec une solution de NaCl saturée et séchée sur sulfate de magnésium. Après évaporation du solvant le sel de pyridinium est purifié par chromatographie sur gel de silice (éluant : CH₂Cl₂/MeOH (4:1)) sous la forme d'un solide amorphe (38mg, 44%).
**Rf** (CH₂Cl₂/MeOH (8:2)) = 0,2
**RMN ¹H** (400MHz, MeOD) δ(ppm) ; 8,98 (d, 2H, ³J = Hz, H*₁₄*) ; 8,54 (dd, 1H, ³J = Hz, H*₁₆*) ; 8,06 (t, 2H, ³J = Hz, H*₁₅*); 7,62 (d, 1H, ⁴J = 2,7Hz, H₇); 7,30 (dd, 1H, ³J = 8,8Hz, ⁴J = 2,7Hz, H*₅*); 6,97 (dd, 1H, ³J_{cis} = 11,2Hz, ³Jₜᵣₐₙₛ = 17,8Hz, H₉); 6,88 (d, 1H, ³J = 8,8Hz, H*₄*); 5,70 (dd, 1H, ²J_{gem} = 1,4Hz, ³Jₜᵣₐₙₛ = 17,8Hz, H*₁₀ₐ*); 5,20 (dd, 1H, ²J_{gem} = 1,4Hz, ³J_{cis} = 11,2Hz, H*_{10b}*); 4,69 (t, 2H, ³J = 7,1Hz, CH₂Pyr); 4,57 (s, 1H, NH); 4,50 (sept., 1H, ³J = 6,1Hz, H₂); 2,50 (t, 2H, ³J = 7,1Hz, H*₁₂*); 2,38 (m, 2H, H*₁₁*); 1,31 (d, 6H, ³J = 6,1Hz, H₁)
**RMN ¹³C** (100MHz, CDCl₃) δ(ppm) : 171,9 (C=O); 153,2 (C3); 147,0 (C14); 146,0 (C16); 132,8; 132,7; 129,5; 129,3; 122,4; 119,58; 116,2; 114,6; 72,5; 62,5; 33,4; 27,9; 22,4

### Synthèse du complexe de ruthénium 11

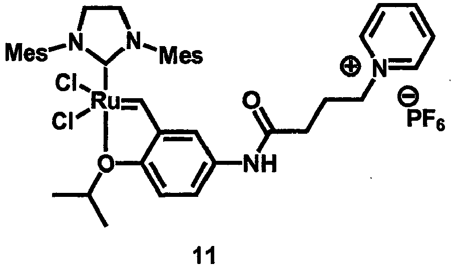

Le ligand 1-(4-(4-isopropoxy-3-vinylphenylamino)-4-oxobutyl)pyridinium hexafluorophosphate(V) **10b** (5mg ; 0,011 mmol ; 1éq.), le chlorure de cuivre (I) (2mg, 1éq.) et le précatalyseur indénylidène (9,6mg, 1éq.) sont introduits dans un ballon sous argon. Le dichlorométhane anhydre (3mL) y est ajouté. Le milieu réactionnel est alors dégazé trois fois, placé à 30-33°C sous atmosphère d'argon et maintenu sous agitation pendant 5h environ.

Le brut réactionnel est alors concentré sous vide. Le résidu est repris à l'acétone (2mL) et filtré sur fritté. Le complexe **11** est ainsi isolé sous la forme d'un solide amorphe vert sombre.
**RMN ¹H** (400MHz, (CD₃)₂CO) δ(ppm) : 16,40 (s, 1H, H₉); 9,25 (d, 2H, ³J = 5,8Hz, H₁₇) ; 9,18 (s, 2H, NH); 8,76 (t, 1H, ³J = 6,5Hz, H₁₉) ; 8,32 (d, 2H, ³J = 6,5Hz, H₁₈) ; 7,62 (m, 2H, H₅); 7,50 (d, 1H, ³J = 2,5Hz, H₇); 7,06 (s, 4H, H₁₂); 6,94 (d, 1H, ³J = 8,8Hz, H₄); 5,00 (t, 2H, ³J = 7,1Hz, H₁₆) ; 4,90 (m, 1H, H₂); 4,27 (s, 4H, H₁₀) ; 2,59 (m, 4H, H₁₄, H₁₅) ; 2,44 (m, 18H, H₁₁,H₁₃) ; 1,23 (d, 6H, ³J=6;1Hz, H₁)

Dans un second temps, l'activation des complexes de ruthénium activé **1a, 1b,1c,1d, 1e** et **1f** a été étudiée.

Les complexes **1a, 1b, 1c, 1d** selon l'invention d'une part, et le complexe de l'art antéieur d'Hoveyda **3b** d'autre part ont été étudiés dans une réaction de métathèse d'oléfines cyclisante avec le métallyle-allyle diethylmalonate **7** à température ambiante dans le dichlorométhane en présence de 1 mol% de complexe selon le schéma réactionnel suivant.

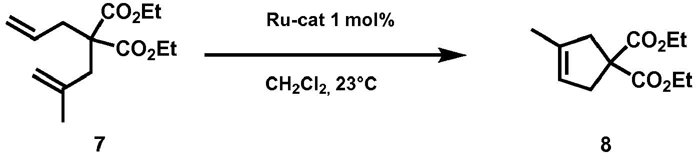

Les résultats des taux de conversion obtenus avec ces composés sont représentés sur le graphe selon la figure 1.

Ces résultats montrent clairement l'effet activateur de la fonction acétamide.

Notamment, quand cette fonction acétamide possède un groupement trifluorométhyle (complexe **1b**) un taux de conversion de plus de 37% après seulement 15 min de réaction est obtenu contre 5% dans le cas du complexe de Hoveyda **3b**.

L'activité du composé **1e** (issu de la complexation avec le catalyseur de Nolan **2c**) et du composé **1b** (issu de la complexation avec le catalyseur de Grubbs II **2b**) d'une part et celle du complexe de l'art antérieur d'Hoveyda **3b** d'autre part ont égalemant été étudiées dans la même réaction et dans les mêmes conditions réactionnelles.

Les résultats des taux de conversion obtenus avec ces composés sont représentés sur le graphe selon la figure 2.

D'une façon tout à fait surprenante, ces résultats montrent une activité similaire pour les catalyseur **1e** et **1b** alors que le complexe de Grubbs II **2b** (portant un ligand SIMes) est beaucoup plus actif que le complexe de Nolan **2c** (portant un ligand IMes)]. Ce résultat est très intéressant car l'espèce catalytique portant un ligand IMes (issue du complexe de Nolan **2c**) est beaucoup plus stable thermiquement que l'espèce catalytique portant un ligand SIMes (générée à partir du complexe de Grubbs II **2b.**

L'invention offre donc la possibilité d'effectuer des réactions de métathèse d'oléfines dans des conditions plus drastiques (chauffage plus élevé) avec le complexe activé **1e** lorsque les substrats sont fortement encombrés (par exemple : oléfines tétrasubstituées). Ainsi, une réaction de métathèse cyclisante d'un composé métallyle-allyle diéthylmalonate réalisée à 45°C, en présence de 1 mol % du complexe catalytique **1e** d'une part et à 30°C en présence de 1 mol % des complexes catalytiques **1b** et **1e** d'autre part. Les résultats des taux de conversion obtenus avec ces composés sont représentés sur le graphe selon la figure 3. Comme prévu, le catalyseur IMes activé **1e** montre une activité remarquable avec un taux de conversion de 87% après seulement 6 minutes de réaction.

L'activité du complexe activé **1b** en diminuant sa charge catalytique dans la réaction de métathèse cyclisante d'un composé métallyle-allyle diéthylmalonate a égalment été évaluée. La figure 4 est un graphique montrant le taux de conversion dans le temps d'un composé métallyle-allyle diéthylmalonate dans le cadre d'une réaction de métathèse cyclisante à 30°C, en présence de 1 mol % du complexe catalytique selon l'invention **1b** d'une part et de 0,3 mol% du complexe catalytique selon l'invention **1b** d'autre part. Le graphique montre une légère diminution de la réactivité cependant celle-ci reste remarquable puisque 75 % de conversion sont observé après seulement 40 minutes de réaction.

Enfin, le complexe activé dimérique **1f** a également été évalué et son activité a été comparée avec les complexes activés **1b** et **1e**. La figure 5 est un graphique montrant le taux de conversion dans le temps d'un composé métallyle-allyle diéthylmalonate dans le cadre d'une réaction de métathèse cyclisante à 30°C, en présence de 1 mol % des complexes catalytiques selon l'invention **1b**, **1e** et **1f**.

## Revendications

1. Composé de formule (I) 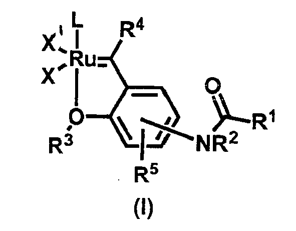 dans laquelle :
X, X' sont des chlores ;
R¹ et R² sont, indépendamment, un hydrogène, un alkyle en C₁ à C₆, un perhalogénoalkyle C₁ à C₆, un aldéhyde, un nitrile, un cyclohexyle, un radical CₙH₂ₙY ou CₙF₂ₙY avec n compris entre 1 et 6, et Y un marqueur ionique, ou un radical de formule : 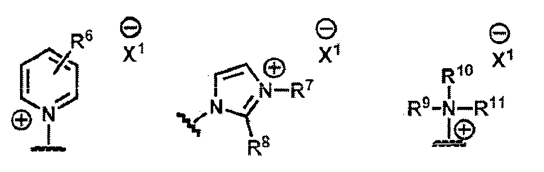
R¹ pouvant être choisi en outre dans le groupe constitué par C₆F₅, pNO₂C₆H₄ et un radical de formule (Ibis), 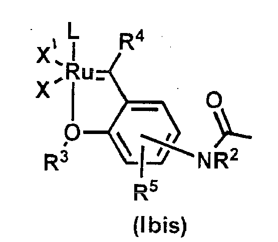
R³ est un alkyle en C₁ à C₆, ou un cycloalkyle en C₅ ou C₆ ou un aryle en C₅ ou C₆ ;
R⁴, R⁵, R⁶, R⁷, R⁸, R⁹, R¹⁰, R¹¹ sont, indépendamment, un hydrogène, un alkyle en C₁ à C₆, un perhalogénoalkyle en C₁ à C₆, ou un aryle en C₅ ou C₆ ; R⁹, R¹⁰, R¹¹ pouvant former un hétérocycle
X¹ est un anion : halogène, tétrafluoroborate ([BF⁴]⁻), [tetrakis-(3,5-bis-(trifluorométhyl)-phényl)borate] ([BARF]⁻), hexafluorophosphate ([PF₆]⁻), hexafluoroantimoine ([SbF₆]⁻), hexafluoroarséniate ([AsF₆]⁻), trifluorométhylsulfonate ([(CF ₃)₂N]⁻);
R¹ et R² pouvant former avec le N et le C auxquels ils sont rattachés un hétérocycle de formule 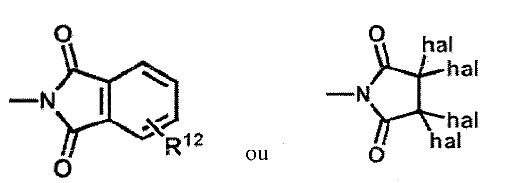
hal étant un halogène et R¹² est un hydrogène, un alkyle en C₁, à C₆, ou un cycloalkyle en C₅ ou C₆ ou un aryle en C₅ ou C₆ .
L est un ligand de formule **7a, ou 7b,** 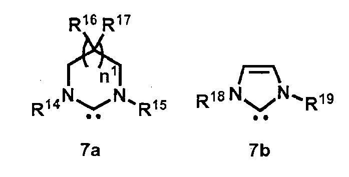 dans lesquelles :
n¹=0, 1, 2, 3;
R¹⁴ , R¹⁵ , R¹⁶ , R¹⁷ , R¹⁸, R¹⁹ sont indépendamment un alkyle en C₁ à C₆, un cycloalkyle en C₃ à C₂₀, un alcényle en C₂ à C₂₀, un naphtyl, un anthracène ou un phényl, ledit phényl pouvant être substitué par jusqu'à 5 groupes choisis parmi les alkyles en C₁ à C₆, les alcoxyles en C₁ à C₆ et les halogènes, ; R¹⁶ et R¹⁷ pouvant former un cycle à 3, 4, 5, 6, 7 chaînons ;
ou L est PCy₃, C_{y} étant le cyclohexyle.

2. Composé selon la revendication 1 dans laquelle R¹ est choisi dans le groupe constitué par CH₃, CF₃, C₆F₅, et pNO₂C₆H₄.

3. Composé selon la revendication 2 dans laquelle R¹ est CF₃.

4. Composé selon la revendication 1 **caractérisé en ce qu'**il répond à la formule **1a**

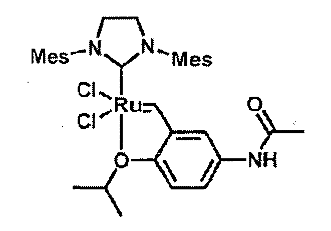

5. Composé selon la revendication 1 **caractérisé en ce qu'**il répond à la formule **1b**

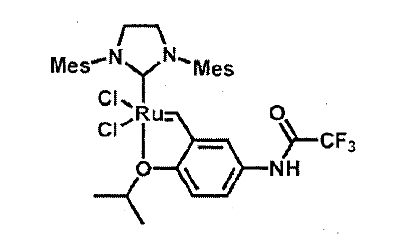

6. Composé selon la revendication 1 **caractérisé en ce qu'**il répond à la formule **1c**

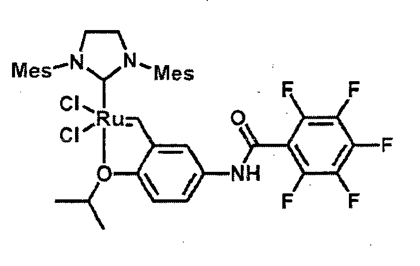

7. Composé selon la revendication 1 **caractérisé en ce qu'**il répond à la formule **1d**

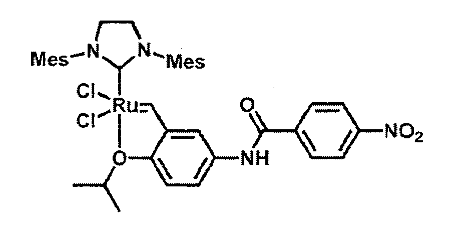

8. Composé selon la revendication 1 **caractérisé en ce qu'**il répond à la formule **1e**

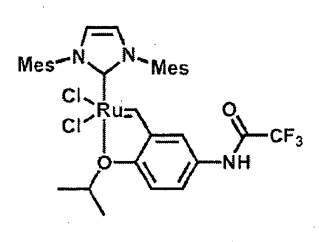

9. Composé selon la revendication 1 **caractérisé en ce qu'**il répond à la formule **1f**

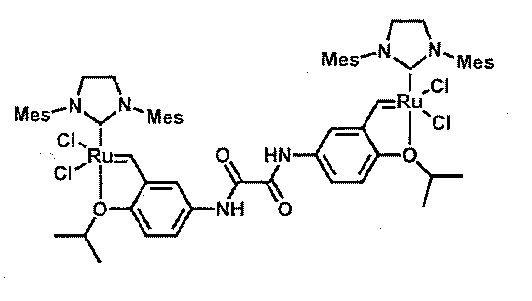

10. Composé selon la revendication 1 **caractérisé en ce qu'**il répond à la formule **1h**

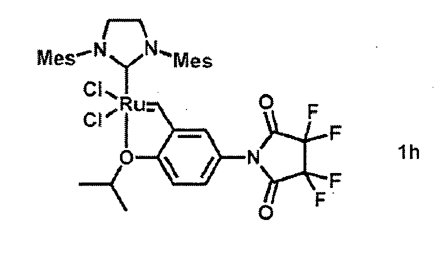

11. Composé selon la revendication 1 **caractérisé en ce qu'**il répond à la formule **1i**

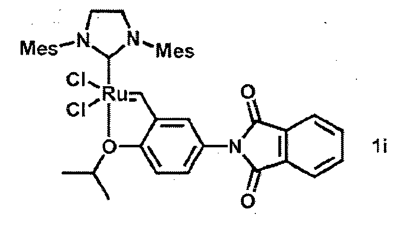

12. Composé selon la revendication 1 **caractérisé en ce qu'**il répond à la formule **11**

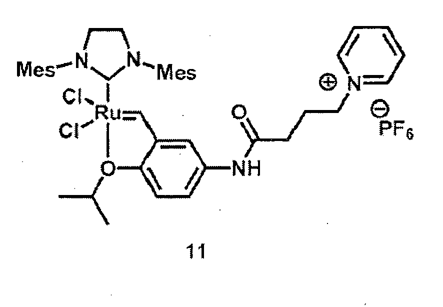

13. Composé selon la revendication 1 **caractérisé en ce qu'**il répond à la formule **12**

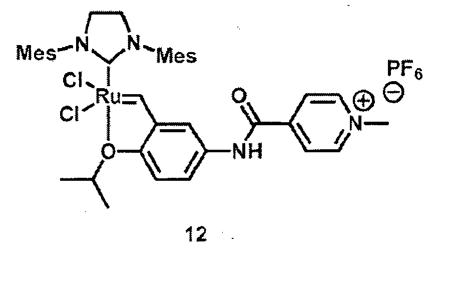

14. Composé selon la revendication 1 **caractérisé en ce qu'**il répond à la formule **13**

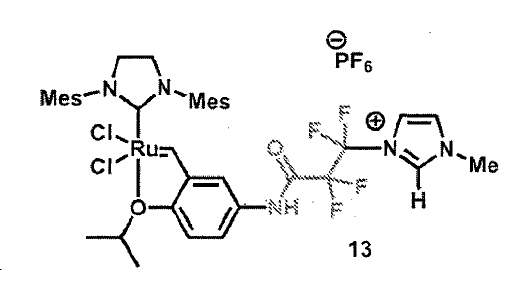

15. Composé selon la revendication 1 **caractérisé en ce qu'**il répond à la formule **14**

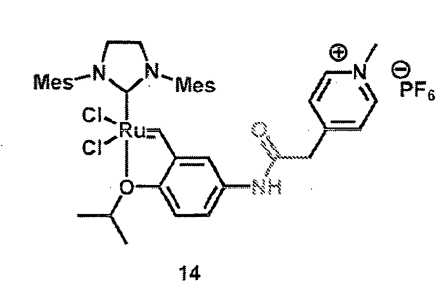

16. Composé de formule **1g, 1j ou 1k**

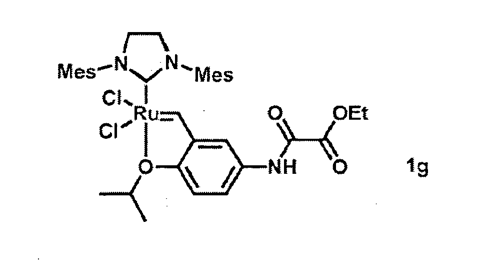

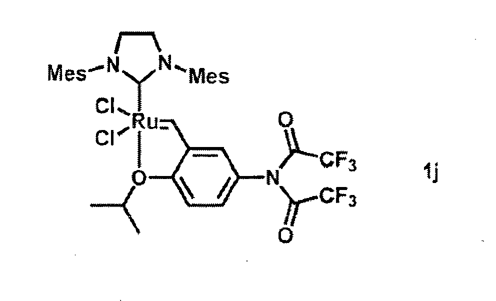

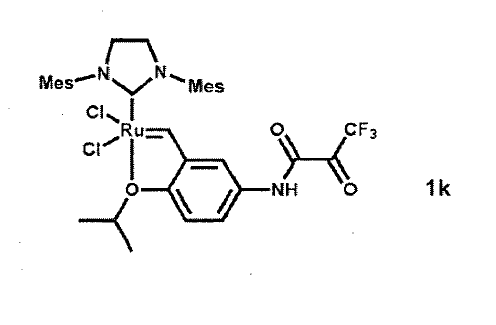

17. Procédé de synthèse d'un composé selon l'une quelconque des revendications 1 à 16 **caractérisé en ce qu'**il comprend une première étape consistant à faire réagir la 4-isopropoxy-3-vinylaniline avec un composé présentant une fonction acyle afin d'obtenir un ligand amide et une seconde étape consistant à faire réagir ce ligand amide avec un composé de formule **(III)**

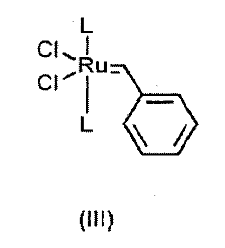

18. Procédé selon la revendication 17 **caractérisé en ce que** ledit composé de formule **(III)** est le précatalyseur Grubbs **(2b)** ou le précatalyseur de Nolan **(2c):**

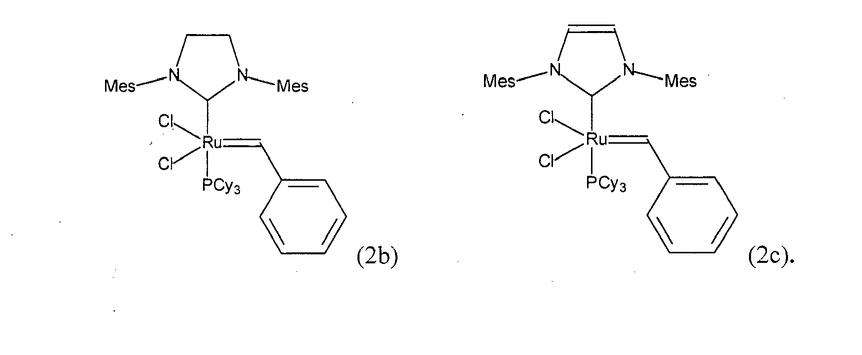

## Patentansprüche

1. Verbindung der Formel **(I)** 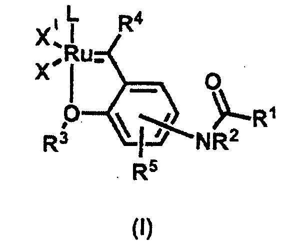 in der:
X, X' für Chloratome stehen;
R¹ und R² unabhängig für Wasserstoff, ein C₁- bis C₆-Alkyl, ein C₁- bis C₆-Perhalogenalkyl, ein Aldehyd, ein Nitril, ein Cyclohexyl, einen CₙH₂ₙY-oder CₙF₂ₙY-Rest, wobei n zwischen 1 und 6 liegt und Y für einen ionischen Marker steht, oder einen Rest der Formel: 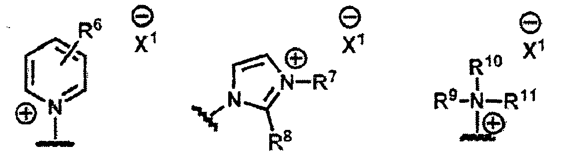 stehen;
wobei R¹ außerdem aus der Gruppe bestehend aus C₆F₅, pNO₂C₆H₄ und einem Rest der Formel (Ia) 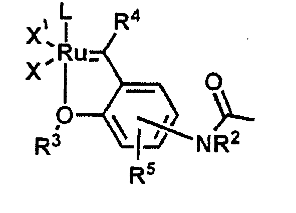 (Ia)
ausgewählt sein kann,
R³ für ein C₁- bis C₆-Alkyl oder ein C₅- oder C₆-Cycloalkyl oder ein C₅- oder C₆-Aryl steht;
R⁴, R⁵, R⁶, R⁷, R⁸, R⁹, R¹⁰ und R¹¹ unabhängig für Wasserstoff, ein C₁- bis C₆-Alkyl, ein C₁- bis C₆-Perhalogenalkyl oder ein C₅- oder C₆-Aryl stehen; wobei R⁹, R¹⁰ und R¹¹ einen Heterocyclus bilden können;
X¹ für ein Halogen-, Tetrafluoroborat([BF₄]⁻)-, [Tetrakis(3,5-bis(trifluormethyl)phenyl)borat]-([BARF]⁻) -, Hexafluorophosphat ([PF₆]⁻)-, Hexafluoroantimonat([SbF₆]⁻)-, Hexafluoroarsenat-([AsF₆]⁻) - oder Trifluormethylsulfonat ( [ (CF₃) ₂N]⁻) - Anion steht;
wobei R¹ und R² mit dem N und dem C, an die sie gebunden sind, einen Heterocyclus der Formel 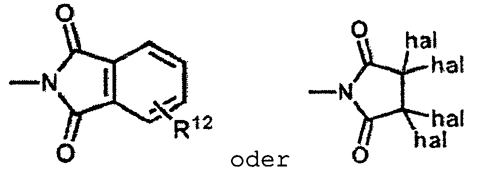 bilden können, wobei hal für ein Halogen steht und R¹² für Wasserstoff, ein C₁- bis C₆-Alkyl, ein C₅-oder C₆-Cycloalkyl oder ein C₅- oder C₆-Aryl steht; L für einen Liganden der Formel **7a** oder **7b** steht, 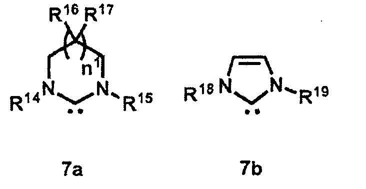 in denen:
n¹ = 0, 1, 2 oder 3;
R¹⁴, R¹⁵, R¹⁶, R¹⁷, R¹⁸ und R¹⁹ unabhängig für ein C₁-bis C₆-Alkyl, ein C₃- bis C₂₀-Cycloalkyl, ein C₂-bis C₂₀-Alkenyl, einen Naphthyl, ein Anthracen oder ein Phenyl stehen, wobei das Phenyl durch bis zu 5 Gruppen, die aus C₁- bis C₆-Alkylgruppen, C₁- bis C₆-Alkoxygruppen und Halogenen ausgewählt sind, substituiert sein kann; wobei R¹⁶ und R¹⁷ einen 3-, 4-, 5-, 6- oder 7-gliedrigen Ring bilden können;
oder L für PCy₃ steht, wobei Cy für Cyclohexyl steht.

2. Verbindung nach Anspruch 1, in der R¹ aus der Gruppe bestehend aus CH₃, CF₃, C₆F₅ und pNO₂C₆H₄ ausgewählt ist.

3. Verbindung nach Anspruch 2, in der R¹ für CF₃ steht.

4. Verbindung nach Anspruch 1, **dadurch gekennzeichnet, dass** sie der Formel **1a** entspricht:

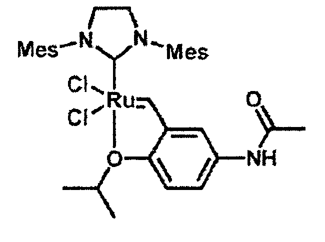

5. Verbindung nach Anspruch 1, **dadurch gekennzeichnet, dass** sie der Formel **1b** entspricht:

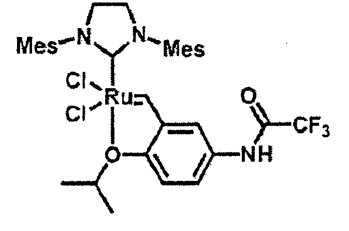

6. Verbindung nach Anspruch 1, **dadurch gekennzeichnet, dass** sie der Formel **1c** entspricht:

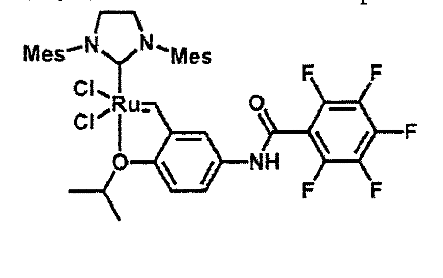

7. Verbindung nach Anspruch 1, **dadurch gekennzeichnet, dass** sie der Formel **1d** entspricht:

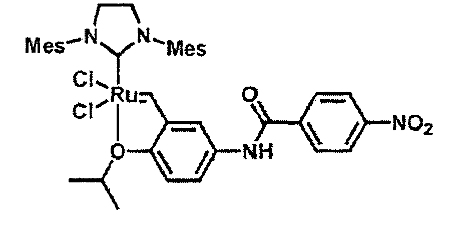

8. Verbindung nach Anspruch 1, **dadurch gekennzeichnet, dass** sie der Formel **1e** entspricht:

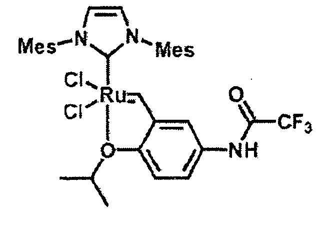

9. Verbindung nach Anspruch 1, **dadurch gekennzeichnet, dass** sie der Formel **1f** entspricht:

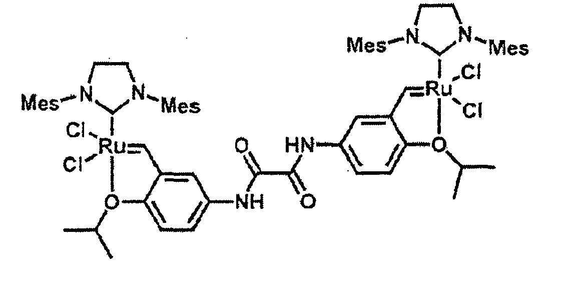

10. Verbindung nach Anspruch 1, **dadurch gekennzeichnet, dass** sie der Formel **1h** entspricht:

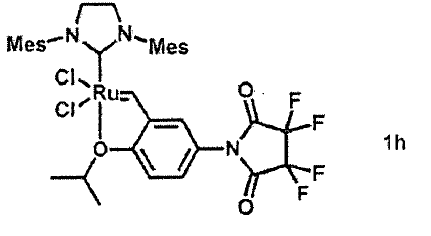

11. Verbindung nach Anspruch 1, **dadurch gekennzeichnet, dass** sie der Formel **1i** entspricht:

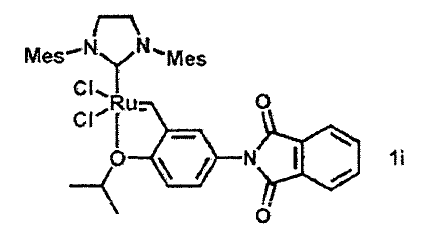

12. Verbindung nach Anspruch 1, **dadurch gekennzeichnet, dass** sie der Formel **11** entspricht:

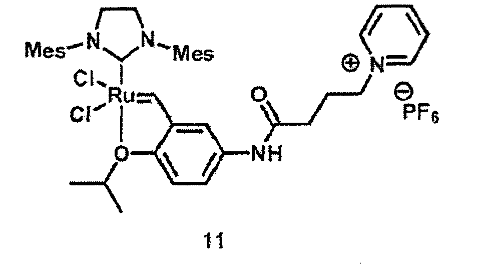

13. Verbindung nach Anspruch 1, **dadurch gekennzeichnet, dass** sie der Formel **12** entspricht:

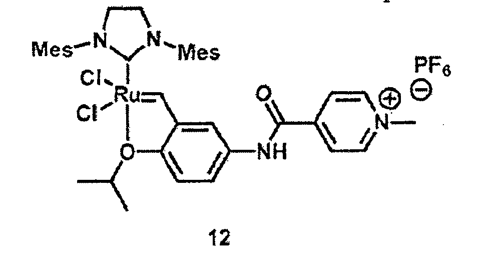

14. Verbindung nach Anspruch 1, **dadurch gekennzeichnet, dass** sie der Formel **13** entspricht:

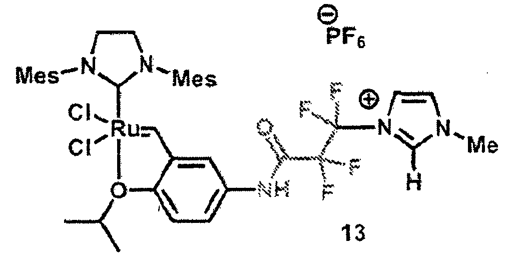

15. Verbindung nach Anspruch 1, **dadurch gekennzeichnet, dass** sie der Formel **14** entspricht:

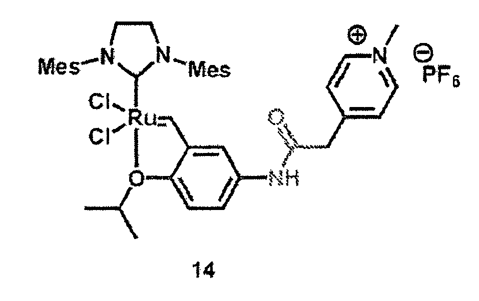

16. Verbindung der Formel **1g, 1j** oder **1k:**

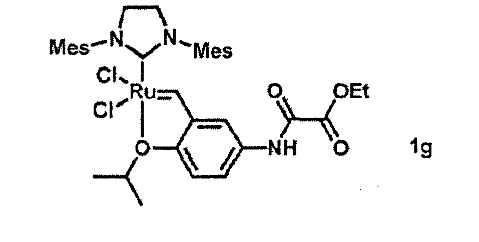

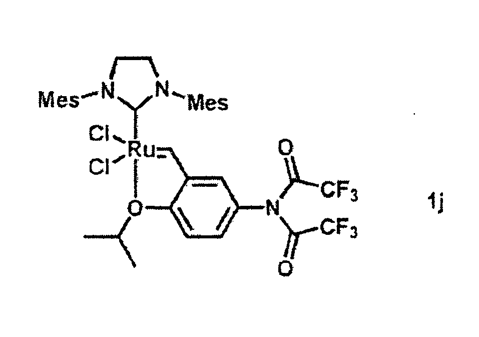

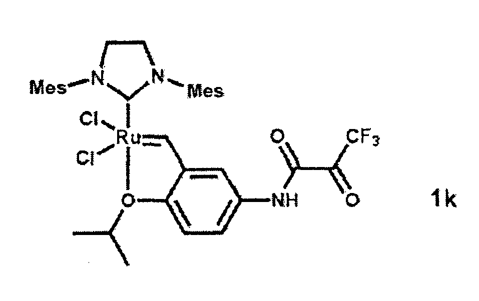

17. Verfahren zur Synthese einer Verbindung nach einem der Ansprüche 1 bis 16, **dadurch gekennzeichnet, dass** es einen ersten Schritt umfasst, der darin besteht, dass man 4-Isopropoxy-3-vinylanilin mit einer Verbindung mit einer Acylfunktion zu einem Amidliganden umsetzt, und einen zweiten Schritt, der darin besteht, dass man diesen Amidliganden mit einer Verbindung der Formel **(III)** 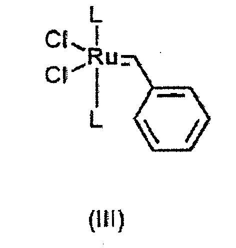 umsetzt.

18. Verfahren nach Anspruch 17, **dadurch gekennzeichnet, dass** es sich bei der Verbindung der Formel **(III)** um den Grubbs-Präkatalysator (**2b**) oder den Nolan-Präkatalysator (**2c**) handelt:

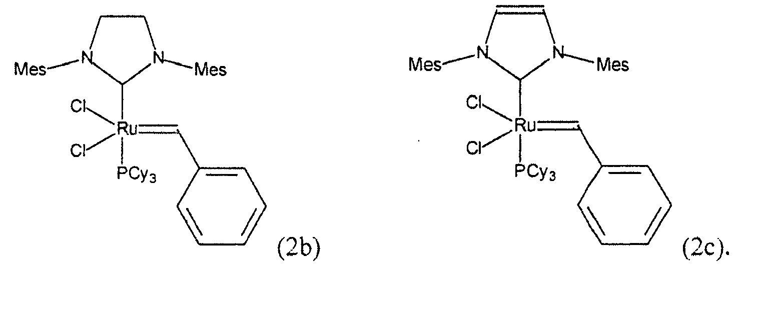

## Claims

1. Compound of formula (I): 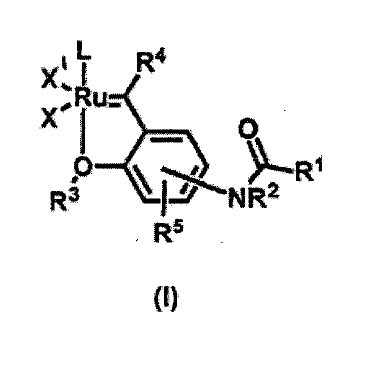 in which:
X, X' are chlorine;
R¹ and R² are independently a hydrogen, a C₁ to C₆ alkyl, a C₁ to C₆ perhaloalkyl, an aldehyde, a nitrile, a cyclohexyl, a CₙH₂ₙY or CₙF₂ₙY radical with n between 1 and 6 and Y an ionic marker, or a radical of formula: 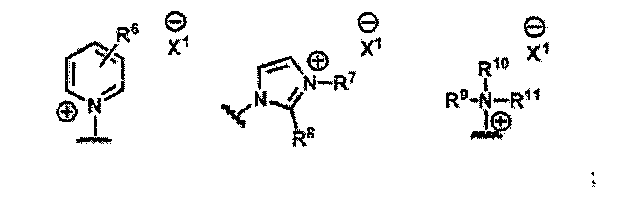
it being possible for R¹ to be chosen in addition from the group consisting of C₆F₅, pNO₂C₆H₄ and a radical of formula (Ia): 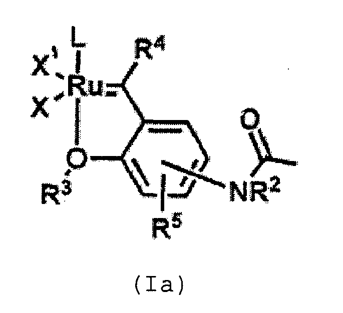
R³ is a C₁ to C₆ alkyl or a C₅ or C₆ cycloalkyl or a C₅ or C₆ aryl;
R⁴, R⁵, R⁶, R⁷, R⁸, R⁹, R¹⁰ and R¹¹ are independently a hydrogen, a C₁ to C₆ alkyl, a C₁ to C₆ perhaloalkyl or a C₅ or C₆ aryl, it being possible for R⁹, R¹⁰ and R¹¹ to form a heterocycle;
X¹ is an anion: halogen, tetrafluoroborate ([BF⁴]⁻), [tetrakis(3,5-bis(trifluoromethyl)phenyl)borate] ([BARF]⁻), hexafluorophosphate ([PF₆]⁻), hexafluoroantimonate ([SbF₆]⁻), hexafluoroarsenate ([AsF₆]⁻) or trifluoromethylsulphonate ([(CF₃)₂N]⁻);
it being possible for R¹ and R² to form, with the N and the C to which they are attached, a heterocycle of formula: 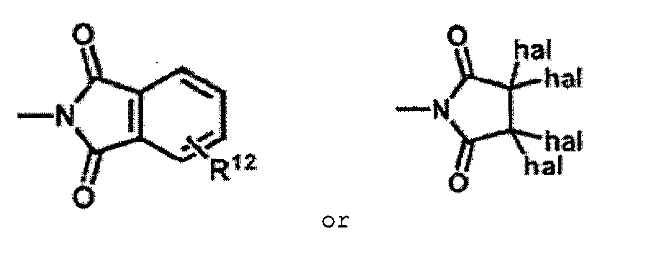 hal being a halogen and R¹² being a hydrogen, a C₁ to C₆ alkyl, a C₅ or C₆ cycloalkyl or a C₅ or C₆ aryl;
L is a ligand of formula **7a** or **7b**: 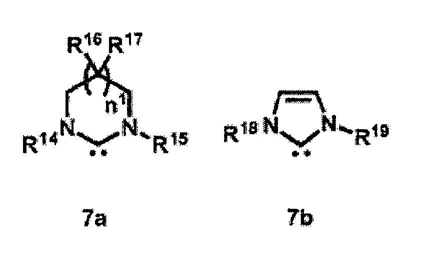 in which:
n¹ = 0, 1, 2 or 3;
R¹⁴, R¹⁵, R¹⁶, R¹⁷, R¹⁸ and R¹⁹ are independently a C₁ to C₆ alkyl, a C₃ to C₂₀ cycloalkyl, a C₂ to C₂₀ alkenyl, a naphthyl, an anthracene or a phenyl, it being possible for the said phenyl to be substituted by up to 5 groups chosen from C₁ to C₆ alkyls, C₁ to C₆ alkoxyls and halogens and it being possible for R¹⁶ and R¹⁷ to form a 3-, 4-, 5-, 6- or 7-membered ring;
or L is PCy₃, Cy being cyclohexyl.

2. Compound according to Claim 1, where R¹ is chosen from the group consisting of CH₃, CF₃, C₆F₅ and pNO₂C₆H₄.

3. Compound according to Claim 2, in which R¹ is CF₃.

4. Compound according to Claim 1, **characterized in that** it corresponds to the formula **1a**:

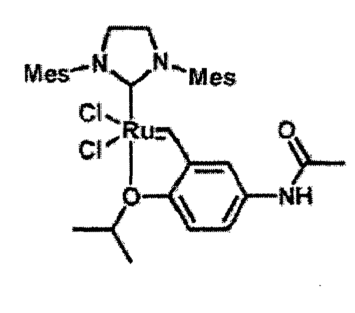

5. Compound according to Claim 1, **characterized in that** it corresponds to the formula **1b**:

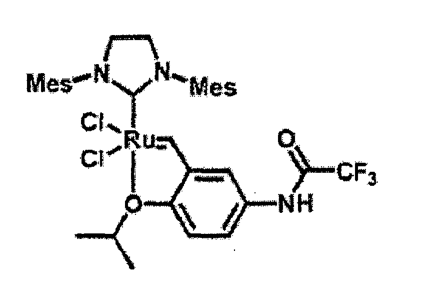

6. Compound according to Claim 1, **characterized in that** it corresponds to the formula **1c**:

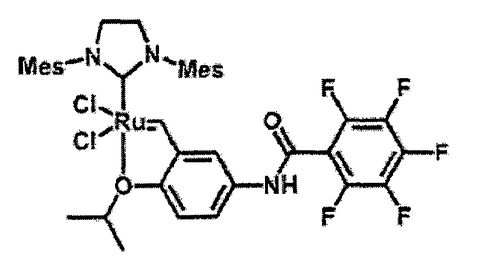

7. Compound according to Claim 1, **characterized in that** it corresponds to the formula **1d**:

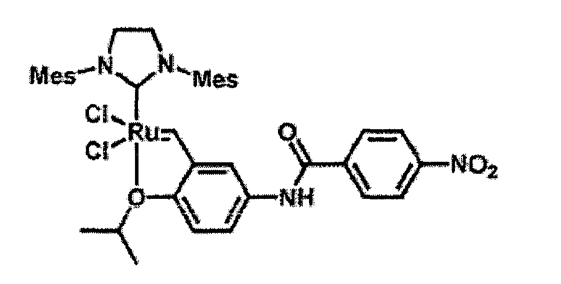

8. Compound according to Claim 1, **characterized in that** it corresponds to the formula **1e**:

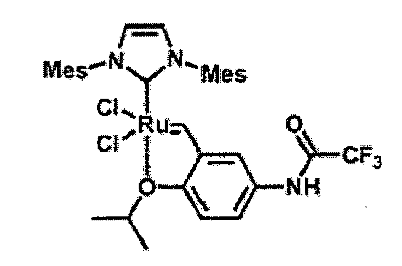

9. Compound according to Claim 1, **characterized in that** it corresponds to the formula **1f**:

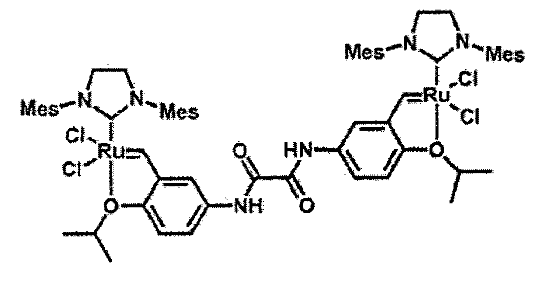

10. Compound according to Claim 1, **characterized in that** it corresponds to the formula **1h**:

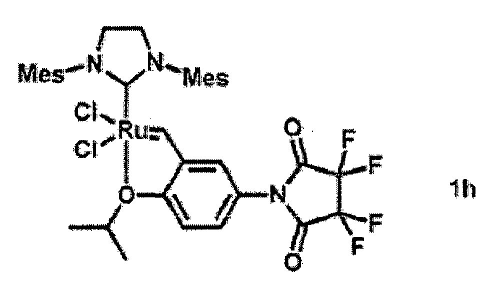

11. Compound according to Claim 1, **characterized in that** it corresponds to the formula **1i:**

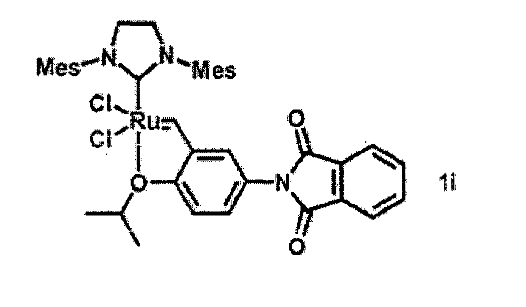

12. Compound according to Claim 1, **characterized in that** it corresponds to the formula **11:**

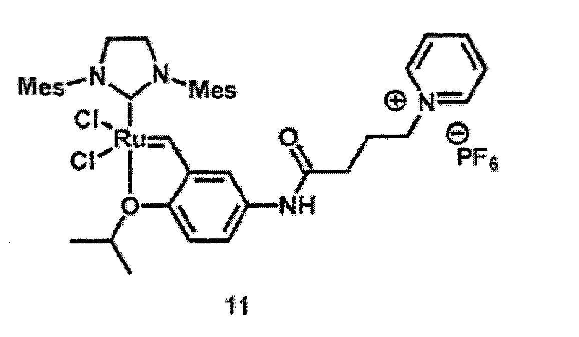

13. Compound according to Claim 1, **characterized in that** it corresponds to the formula **12:**

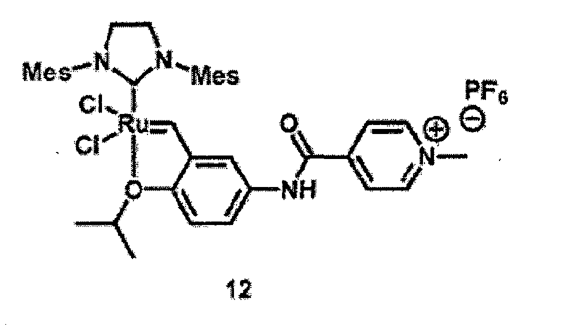

14. Compound according to Claim 1, **characterized in that** it corresponds to the formula **13:**

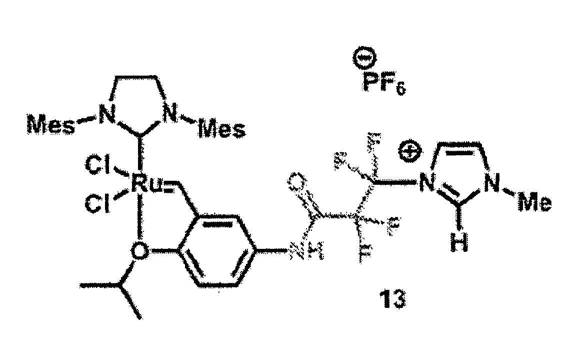

15. Compound according to Claim 1, **characterized in that** it corresponds to the formula **14:**

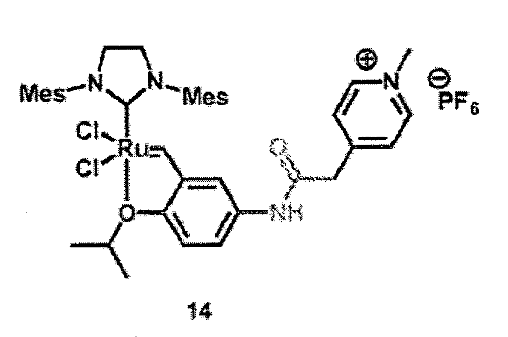

16. Compound of formula **1g, 1j** or **1k:**

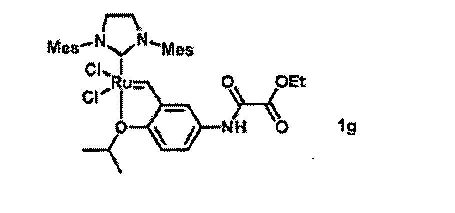

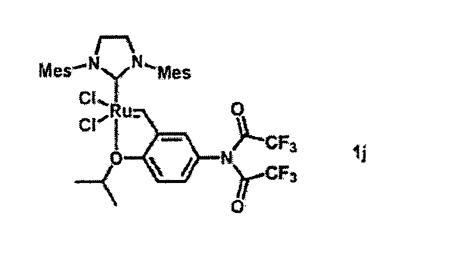

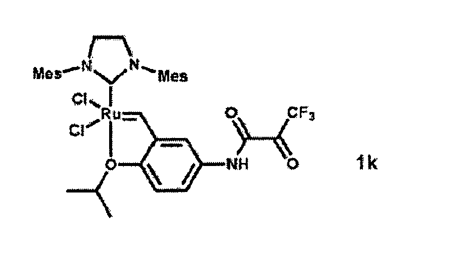

17. Process for the synthesis of a compound according to any one of Claims 1 to 16, **characterized in that** it comprises a first stage which consists in reacting 4-isopropoxy-3-vinylaniline with a compound exhibiting an acyl functional group, in order to obtain an amide ligand, and a second stage which consists in reacting this amide ligand with a compound of formula (**III**):

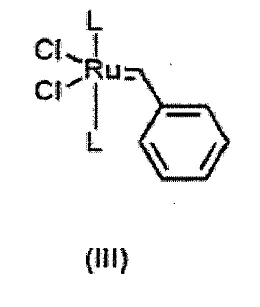

18. Process according to Claim 17, **characterized in that** the said compound of formula (**III**) is the Grubbs' precatalyst (**2b**) or the Nolan's precatalyst (**2c**):
